# EUROPÄISCHE PATENTSCHRIFT

(11) **EP 2 324 398 B1**
(45) Veröffentlichungstag und Bekanntmachung des Hinweises auf die Patenterteilung: **20.03.2013**
(21) Anmeldenummer: 09775562.3
(22) Anmeldetag: 15.07.2009
(51) Int. Cl.: G05B 6/05, G05B 13/02, G05B 9/02

(54) **VERFAHREN ZUM BETREIBEN EINES MOBILEN HANDBEDIENGERÄTES FÜR DIE ABGABE ODER FREISCHALTUNG VON POTENTIELL GEFAHRBRINGENDEN STEUERKOMMANDOS SOWIE ENTSPRECHENDES HANDBEDIENGERÄT**
METHOD FOR OPERATING A MOBILE HAND-OPERATED DEVICE FOR THE GIVING OR TRIGGERING OF POTENTIALLY DANGEROUS CONTROL COMMANDS AND CORRESPONDING HAND-OPERATED DEVICE
PROCÉDÉ DE FONCTIONNEMENT D'UN TERMINAL PORTATIF UTILISATEUR POUR L'ABANDON OU LA LIBÉRATION D'INSTRUCTIONS DE COMMANDE POTENTIELLEMENT DANGEREUSES ET TERMINAL PORTATIF UTILISATEUR CORRESPONDANT

(30) Priorität: 21.07.2008 AT 40008 U
(43) Veröffentlichungstag der Anmeldung: 25.05.2011
(73) Patentinhaber: KEBA AG, 4041 Linz (AT)
(72) Erfinder: PREISINGER, Gernot, A-4030 Linz (AT); SCHININGER, Manfred, A-4030 Linz (AT); WÖGER, Clemens, A-4490 St. Florian (AT); ZEININGER, Alois, A-4073 Wilhering (AT)
(74) Vertreter: Burger, Hannes
(86) Internationale Anmeldenummer: PCT/AT2009/000276
(87) Internationale Veröffentlichungsnummer: WO 2010/009488

(56) Entgegenhaltungen:
- EP-A1- 1 321 952
- EP-A2- 1 785 237
- AT-B- 408 325
- DE-A1- 10 023 199

## Beschreibung

Die Erfindung betrifft ein Verfahren zum Betreiben eines mobilen Handbediengerätes, welches für die Abgabe oder Freischaltung von potentiell gefahrbringenden Steuerkommandos an eine steuerbare technische Einrichtung vorgesehen ist, sowie ein entsprechend ausgebildetes, mobiles Handbediengerät und eine Sicherheitsschalteinrichtung, wie dies in den Ansprüchen 1, 19 und 20 angegeben ist.

Der Einsatz und die Funktionalität von bevorzugt dreistufigen und vorzugsweise zweikreisigen Zustimmtastern für mobile Handbediengeräte und für ähnliche mobile Befehlsgeräte ist aus dem Stand der Technik bekannt. Solche Zustimmtaster werden in Kombination mit anderen Eingabeelementen verwendet, um potentiell gefahrbringende Maschinenoperationen, wie beispielsweise beim Teachen von Robotern oder beim Einstellen von Werkzeugmaschinen, möglichst sicher ausführen zu können. Eine durch weitere Eingabeelemente ausgewählte Maschinenfunktion wird dabei nur dann und nur so lange ausgeführt, wie die Bedienperson den Zustimmtaster ausgehend von einem unbetätigten Ruhezustand in einem ersten Betätigungszustand, insbesondere in einem Zustimmungs-Betätigungszustand gedrückt hält und damit der Maschinenoperation ausdrücklich zustimmt. Lässt die Bedienperson beispielsweise beim Eintritt einer Gefahrensituation den Zustimmtaster los oder erhöht die Bedienperson infolge einer Gefahrensituation die Betätigungskraft weiter und führt sie dadurch den Zustimmtaster von diesem ersten Betätigungszustand in einen weiteren, zweiten Betätigungszustand über, so wird die Maschinenoperation umgehend gestoppt. Dieser zweite Betätigungszustand wird häufig auch als Panik-Stopp- bzw. Panik-Betätigungszustand bezeichnet. Die Zustimmtaster sowie die daran angebundenen Auswerteschaltungen und Signalübertragungskomponenten erfüllen dabei eine wichtige Funktion für den Schutz von Menschen und Sachwerten. Diese Komponenten sind daher üblicherweise in besonders sicherer Technik ausgeführt, d.h. insbesondere durchgehend zweikreisig, d.h. mit mehreren eigenständigen, jedoch gleich wirkenden Schaltkreisen, sowie mit zwangsöffnenden Kontakten versehen, sodass eine Stillsetzung bzw. der Abbruch einer Maschinenoperation auch beim Vorliegen eines einzelnen technischen Fehlers noch zuverlässig möglich ist.

Für ein lange andauerndes und trotzdem möglichst ermüdungsfreies Arbeiten ist es zweckmä-βig, wenn der Zustimmtaster ergonomisch günstig in das Handbediengerät integriert ist, sodass er mühelos mit jener Hand betätigbar ist, mit welcher das Handbediengerät gehalten wird, während die jeweils andere Hand zur Betätigung verschiedener weiterer Bedien- bzw. Eingabeelemente, beispielsweise einem Touch-Screen, einem Handrad, einem Joystick oder dergleichen verwendet wird. Da die Handbediengeräte üblicherweise sowohl von Rechtshändem als auch Linkshändern bedienbar sein sollen und darüber hinaus die Handhabung je nach Bediensituation unterschiedlich sein kann, sind die Handbediengeräte in der Regel mit mehreren Zustimmtastern an unterschiedlichen Griffpositionen ausgestattet. Diese mehrfach ausgebildeten Zustimmtaster sind dabei zur Abgabe eines Zustimmungssignals wahlweise bzw. alternativ verwendbar bzw. betätigbar.

Aus der EP 1 229 562 A1 sind mechanische Lösungen für Zustimmtaster bekannt, welche zweikreisig und dreistufig ausgebildet sind und bei welchen sichergestellt ist, dass nach dem Durchdrücken des Zustimmtasters in die Panik-Stellung und beim anschließenden Loslassen des Tasters und der dabei auftretenden, vorübergehenden Einnahme der Zustimmungs-Stellung das Zustimmungssignal gesperrt bleibt. Erst beim Überführen des Betätigungszustandes von der unbetätigten Grundstellung in die Zustimmungs-Stellung werden die elektrischen Kontakte für die Zustimmung wieder geschlossen und wird damit die Maschinenoperation freigegeben. Diese rein mechanische Umsetzung führt aufgrund der gleichzeitig zu erfüllenden Anforderungen an die Sicherheit und auch an die Betriebszuverlässigkeit zu relativ aufwändigen und teuren Ausführungen, die überdies ein vergleichsweise großes Bauvolumen einnehmen.

Aus der AT 408 325 B der Anmelderin ist eine Ausführung eines Zustimmtasters bekannt, bei dem die Sperrfunktionalität bzw. die Unterdrückungsfunktion zur Vermeidung einer kurzzeitigen, unter Umständen kritischen Zustimmung nach dem Verlassen des Panik-Betätigungszustandes nicht mehr durch die mechanische Ausgestaltung des Zustimmtasters, sondern durch eine spezielle elektronische Auswerteschaltung sichergestellt ist. Die Verlagerung von Sicherheitsfunktionalitäten von der eigentlichen Schaltermechanik in die elektronische Auswerteschaltung ermöglicht eine vergleichsweise einfachere, vergleichsweise robustere und preisgünstigere Schaltermechanik und bietet überdies breiteren Gestaltungsspielraum bei der Anpassung der Mechanik an die verschiedenen Einbausituationen.

Aus der EP 1 321 952 A1 sowie der EP 1 595 659 A1 sind Ausführungen zur Verschaltung mehrerer Zustimmtaster eines Handbediengerätes bekannt, durch welche sichergestellt wird, dass nach der Überführung von einem der Zustimmtaster in seine Panik-Stellung und der damit verbundenen Rücknahme des Freigabesignals an die Maschine, die erneute Freigabe erst dann wieder ermöglicht ist, wenn für alle Zustimmtaster des Handbediengerätes der unbetätigte Zustand hergestellt und festgestellt wurde.

Aus der US 2003/0018411 A1 ist eine Ausgestaltung bekannt, bei der ebenfalls mehrere Zustimmtaster eines Handbediengerätes zur Abgabe eines gemeinsamen Freigabe- bzw. Zustimmungssignals verschaltet sind, wobei durch eine Auswerteschaltung gesichert ist, dass das Freigabesignal nur dann gesetzt wird, wenn genau ein Zustimmtaster in den Zustimmungs-Betätigungszustand versetzt wird und wobei die Freigabe entzogen wird, falls ein weiterer Zustimmtaster ebenfalls in den Zustimmungs-Betätigungszustand versetzt wird.

Aus der EP 1 785 237 A2 ist ein Steuerungssystem für Industrieroboter mit einem Handbediengerät bekannt, welches für die Abgabe oder Freischaltung von potentiell gefahrbringenden Steuerkommandos in einem sogenannten Teach-Modus dient. Der Zustimmtaster des Handbediengerätes ermöglicht, gemäß der Betätigungskraft, drei Zustände: ein Ruhestand, ein Betätigunszustand, und ein Panik-Betätigungszustand.

Bei den Ausführungen gemäß dem Stand wird das zuverlässige Funktionieren eines Zustimmtasters ausschließlich durch konstruktive Maßnahmen sichergestellt, wie etwa durch die zweikreisige Ausführung der Kontakte bzw. der sensorischen Erfassungselemente zur Bestimmung des jeweiligen Betätigungszustandes sowie zum Beispiel durch die Verwendung von zwangsöffnenden, elektrischen Kontakten. Das Setzen des Freigabesignals ist bei den Ausgestaltungen nach dem Stand der Technik durch Betätigen eines Zustimmtasters jederzeit möglich. Durch vergleichsweise aufwändige konstruktive Maßnahmen wird dabei versucht, die Wahrscheinlichkeit eines Fehlers, der zum Verlust der Sicherheit führt, ausreichend gering zu halten.

Entsprechend dem vorbekannten Stand der Technik gilt vor allem das Konstruktionsprinzip der Einfehlersicherheit, d.h. dass das Auftreten eines einzelnen Fehlers nicht zum Verlust der Sicherheit führen darf; also der Entzug des Freigabesignals zuverlässig möglich sein muss und eine fehlerhafte Abgabe des Freigabe- bzw. Zustimmungssignals ohne eine entsprechende Betätigung des Zustimmtasters sicher unterbunden wird. Es verbleibt dabei aber das Problem, dass das Bestehen eines einzelnen Fehlers oftmals unbemerkt bleibt und es irgendwann zu einem weiteren Fehler kommt, welcher dann sehr wohl zu einem Verlust der Sicherheit führen kann.

Die tatsächliche Wirkung und Erfassung der Ruhelage bzw. des Ruhezustandes und des Zustimmungs-Betätigungszustandes des Zustimmtasters sind aufgrund der zweikreisigen Erfassung und Auswertung sowie der quasi zwingenden Einnahme dieser beiden Zustände bei bzw. noch vor der Abgabe des Zustimmungssignals technisch grundsätzlich überprüfbar. Die tatsächliche Funktion des Panik-Betätigungszustandes bleibt vor der Abgabe des Zustimmungssignals gemäß dem Stand der Technik jedoch ungeprüft und wird das Funktionieren bzw. tatsächliche Wirken des Panik-Betätigungszustandes lediglich durch konstruktive Maßnahmen mit hinreichender Wahrscheinlichkeit vorausgesetzt. Ein möglicherweise vorhandener Defekt des Zustimmtasters bleibt aber unerkannt.

Ein weiteres Problem der Ausgestaltungen nach dem Stand der Technik liegt darin, dass bei Handbediengeräten mit mehreren Zustimmtastern in der Regel alle Zustimmtaster in gleicher Weise zur Abgabe des Freigabe- bzw. Zustimmungssignals verwendbar sind. Je nach Konstruktion und Handhabung des Handbediengerätes kann es jedoch dazu kommen, dass auch ein anderer bzw. zusätzlicher Zustimmtaster eigentlich ungewollt durch einen Teil einer Hand oder des Körpers der Bedienperson ausgelöst wird. D.h., dass an diesem Zustimmtaster eine Abgabe einer Zustimmung in der jeweiligen Handhabungssituation eigentlich nicht vorgesehen war und eine Zustimmung häufig unbewusst erfolgte. Dies wird dadurch verschärft, dass die Zustimmtaster aus ergonomischen Gründen vergleichsweise großflächige Betätigungselemente aufweisen, bequem zugänglich sind und die Zustimmposition mit nur geringer Betätigungskraft leichtgängig eingenommen werden kann, während die Einnahme des Panik-Betätigungszustandes das Aufbringen einer deutlich höheren Betätigungskraft oder eines größeren Verstellweges erfordert.

Der vorliegenden Erfindung liegt die Aufgabe zugrunde, Verfahren bzw. Vorrichtungen anzugeben, mit welchen der Betrieb bzw. die Handhabung eines mobilen Handbediengeräts für die Abgabe oder Freischaltung von potentiell gefahrbringenden Steuerkommandes möglichst sicher gestaltet werden kann, ohne dass hierfür baulich aufwendige Vorrichtungen oder technisch komplexe Zustimmtaster erforderlich sind.

Eine weitere Aufgabe der Erfindung liegt in der Schaffung von Maßnahmen, durch welche der Einsatz mehrerer alternativ verwendbarer Zustimmtaster an einem Handbediengerät ohne Sicherheitsprobleme bzw. ohne Verursachung von kritischen Zuständen ermöglicht ist.

Unabhängig davon liegt eine Aufgabe darin, eine technische Lösung anzugeben, welche eine möglichst intuitive und einfache Möglichkeit zur selektiven Umschaltung zwischen mehreren, an einem Handbediengerät vorgesehenen Zustimmtastern bietet.

Zumindest die erstgenannte Aufgabe der Erfindung wird durch die Maßnahmen gemäß Anspruch 1 gelöst.

Ein wesentlicher Vorteil der erfindungsgemäßen Maßnahmen liegt darin, dass die Sicherheitsschalteinrichtung erhöhte Betriebs- bzw. Funktionssicherheit gewährleistet bzw. bietet und somit hohen Sicherheitsanforderungen Rechnung getragen wird. Etwaige Sicherheitsrisiken infolge eines technischen Versagens der Sicherheitsschalteinrichtung können dadurch stark reduziert bzw. nahezu ausgeschlossen werden. Insbesondere ist sichergestellt, dass mittels einem Zustimmtaster nur dann Zustimmung signalisierbar ist bzw. der steuerbaren technischen Einrichtung nur dann ein Zustimmungssignal vorliegt, wenn der zweite Betätigungszustand, d.h. der Panik-Betätigungszustand dieses Zustimmtasters tatsächlich einnehmbar und zuverlässig erfassbar ist. Das heißt, mittels einem Zustimmtaster ist nur dann ein Zustimmungssignal an die steuerbare technische Einrichtung abgebbar bzw. signalisierbar, wenn der Zustimmtaster funktioniert und dieser Zustimmtaster somit die ihm zugedachte Erhöhung der Betriebssicherheit innerhalb der technischen Einrichtung auch gewährleisten kann. Erfindungsgemäß ist also mittels einem Zustimmtaster nur dann ein Zustimmungszustand signalisierbar, wenn er zumindest auch in den Panik-Betätigungszustand überführbar ist, sodass damit in Not- bzw. Paniksituationen eine unmittelbare Beendigung von gefahrbringenden Steuerkommandos oder Vorgängen oder eine Überführung der technischen Einrichtung in einen sicheren Betriebszustand tatsächlich bewirkt werden kann. Entsprechend der vorteilhaften Variante bzw. Alternative bezüglich der vorsorglichen Überprüfung bzw. signaltechnischen Erfassbarkeit des Panik-Betätigungszustandes als auch des Ruhezustandes ist von Vorteil, dass mit einem Zustimmtaster nur dann ein Zustimmungssignal freigegeben bzw. abgegeben werden kann, wenn zuvor sowohl der Panik-Betätigungszustand als auch der Ruhezustand, d.h. der unbetätigte Zustand, eingenommen und fehlerfrei erfasst worden sind und somit die vorgesehene bzw. plangemäße Funktionalität des Zustimmtasters vorliegt bzw. gewährleistet ist. Das heißt, dass erforderlichenfalls eine sichere bzw. zuverlässige Beendigung von potentiell gefahrbringenden Steuerkommandos ermöglicht ist. Das Sicherheitsniveau bzw. die Sicherheitsstufe wird dadurch weiter erhöht bzw. deutlich gesteigert. Ein wesentlicher Vorteil dieser Maßnahmen liegt auch darin, dass die Mechanik des bzw. der Zustimmtaster vergleichsweise einfacher ausgeführt sein kann und trotzdem eine hohe Betriebszuverlässigkeit bzw. Betriebssicherheit erreicht wird. Insbesondere kann die Schaltermechanik relativ einfach ausgeführt sein, da die Panik-Betätigungsstellung seitens der Auswerteschaltung bzw. Sicherheitsschalteinrichtung öfters getestet oder zumindest vor der steuerungstechnischen Aktivierung des Zustimmtasters überprüft wird. Folglich kann eine einfachere mechanische bzw. elektrische Konstruktion vorgesehen werden, wodurch sich Vorteile im Hinblick auf niedrigere Herstellungskosten und Vorteile bezüglich hoher Kompaktheit eines derartigen Zustimmtasters erzielen lassen. Gegebenenfalls können nunmehr auch Schließer-Kontakte zur Erfassung des Panik-Betätigungszustandes eingesetzt werden und kann trotzdem hohen Sicherheitsanforderungen Rechnung getragen werden. Bisher waren zwangsöffnende Kontakte für die Erfassung des Panik-Betätigungszustandes nahezu zwingend erforderlich, um erhöhten Sicherheitsanforderungen gerecht zu werden. Somit wird durch die erfindungsgemäßen Maßnahmen auch eine Vereinfachung des mechanischen bzw. elektromechanischen und elektrischen Aufbaus erzielt.

Bei der Weiterbildung gemäß Anspruch 2 ist von Vorteil, dass eine spezielle bzw. vordefinierte und bewusste Bedienhandlung erforderlich ist, um einen Zustimmtaster zu aktivieren bzw. in den Aktivmodus zu überführen. Die Wahrscheinlichkeit einer unbewussten oder ungewollten Zuordnung des Aktivmodus oder einer unbedachten Umschaltung zwischen Inaktiv- und Aktivmodus wird damit deutlich herabgesetzt. Fehlerhafte bzw. irrtümliche Bedienhandlungen und daraus resultierende, nachteilige Folgen werden somit stark reduziert bzw. eliminiert.

Bei Anwendung der Maßnahmen gemäß Anspruch 3 ist von Vorteil, dass ein Zustimmtaster vom Benutzer auch gezielt und bewusst deaktiviert bzw. in den Inaktivmodus überführt werden kann. Ferner wird dadurch in besonders vorteilhafter Art und Weise erreicht, dass beim Überführen eines im Aktivmodus vorliegenden Zustimmtasters in den Panik-Betätigungszustand, d.h. beim Überführen in den zweiten Betätigungszustand im Falle einer tatsächlichen Not- bzw. Paniksituation, dieser Zustimmtaster nach Einleitung bzw. Veranlassung der sicherheitsrelevanten Zustände automatisch deaktiviert wird bzw. in den Inaktivmodus überführt wird. Dadurch wird in besonders vorteilhafter Art und Weise erreicht, dass nach dem Loslassen des Zustimmtasters und einem erneuten, unmittelbaren Zupacken durch den Bediener nicht wieder unbeabsichtigt eine Zustimmung signalisiert wird. Das heißt, dass dadurch nach Einleitung eines Panik-Betätigungszustandes eine sofortige, zumeist unbeabsichtigte Einnahme des Zustimmungs-Betätigungszustandes nicht zu einer Signalisierung oder Bereitstellung eines Zustimmungssignals führt.

Bei der Ausführung gemäß Anspruch 4 ist von Vorteil, dass an jedem von mehrfach ausgebildeten zustimmtastern der Panik-Betätigungszustand wirksam eingeleitet werden kann. Das heißt, dass bei einer Mehrzahl von Zustimmtastern seitens des Benutzers ein beliebiger Zustimmtaster, also unabhängig vom Vorliegen des Aktiv- oder Inaktivmodus betätigt werden kann, um einen Panik-Stopp-Zustand einzuleiten. Demnach ist völlig unabhängig vom Aktiv- oder Inaktivzustand mit jedem der Zustimmtaster eine sichere Beendigung von gefahrbringenden Steuerkommandos oder eine zuverlässige Überführung in einen sicheren Betriebszustand erzielbar. Dies erhöht die Reaktionszeit beim Auftreten von potentiellen Notsituationen. Erhöhte Sicherheit wird also dadurch erreicht, dass eine Panik-Abschaltung mit jedem von mehrfach vorhandenen Zustimmtastern funktioniert und diese Panik-Abschaltung unabhängig von einer Freigabe bzw. Zuordnung des aktiven Auswertemodus ist. Ein zeitaufwändiges und fehleranfälliges Ermitteln eines im Aktivmodus befindlichen Zustimmtasters ist dadurch vermieden.

Durch die Maßnahmen gemäß Anspruch 5 ist sichergestellt, dass kein Zustimmungssignal abgegeben wird, wenn eine Mehrzahl von Zustimmtastern ausgebildet ist, von denen sich mehrere im Aktivmodus befinden, aber keiner dieser Zustimmtaster betätigt ist. Das heißt, dass ohne einer aktiven Zustimmung eines Benutzers an einem im Aktivmodus befindlichen Zustimmtaster kein Zustimmungssignal vorliegt bzw. abgegeben wird. Außerdem werden Zustimmtaster, die sich im Inaktivmodus befinden und vom Benutzer in den Zustimmungs-Betätigungszustand versetzt werden, seitens der Auswerteschaltung ignoriert bzw. als Zustimmtaster gewertet, mit denen eine Bereitstellung eines Zustimmungssignals nicht ermöglicht ist.

Durch die Maßnahmen gemäß Anspruch 6 ist sichergestellt, dass an einem Zustimmtaster bzw. an jenen Zustimmtastern, an denen der Inaktivmodus vorliegt, die Abgabe bzw. Einleitung eines Zustimmungszustandes nicht ermöglicht ist. Dadurch werden unbeabsichtigte bzw. unbedachte Zustimmungen des Bedieners zu einer potentiell gefahrbringenden Steuerungs- bzw. Maschinenoperation ausgeschlossen. Weiters ist dadurch sichergestellt, dass der mit einem Zustimmtaster signalisierte Zustimmungszustand zurückgenommen wird, sobald diesem Zustimmtaster zum Beispiel durch ein allgemeines Rücksetzsignal oder durch den Ablauf eines Timers oder durch die Aktivierung eines anderen Zustimmtasters der Aktivmodus entzogen bzw. der Inaktivmodus zugeordnet wird.

Durch die Maßnahmen gemäß Anspruch 7 wird erreicht, dass der oder die Zustimmtaster in einen definierten Initial-Zustand oder in einen bedarfsweise einleitbaren Reset-Zustand versetzt werden können. So ist es beispielsweise nach dem Einschalten des Handbediengerätes stets erforderlich, den gewünschten bzw. ergonomisch am besten platzierten Zustimmtaster quasi aktiv auszuwählen und durch eine zumindest einmalige Betätigung bis in den Panik-Betätigungszustand zu aktivieren bzw freizuschalten, bevor mit diesem Zustimmtaster eine Zustimmung zur Ausführung von potentiell gefahrbringenden Steuerkommandos signalisiert werden kann.

Bei den Maßnahmen gemäß Anspruch 8 ist von Vorteil, dass immer nur genau einer von mehrfach ausgebildeten Zustimmtastern im Aktivmodus vorliegt. Die Gefahr eines unabsichtlichen Auslösens eines Zustimmungssignals mittels einem anderen, als in der jeweiligen Handhabungssituation vorgesehenen und ausgewählten Zustimmtaster wird dadurch zuverlässig vermieden. Die Abgabe ungewollter Zustimmungszustände ist dabei auch dann zuverlässig vermieden, wenn der Zustimmungs-Betätigungszustand, d.h. der erste Betätigungszustand, bei den jeweiligen Zustimmtastern aus ergonomischen Gründen sehr leichtgängig ist. Ferner können die Betätigungsflächen der Zustimmtaster relativ groß und leicht zugänglich ausgeführt sein, wodurch bisher die Gefahr bestand, dass ein derartiger Zustimmtaster, beispielsweise mit dem Handballen, während dem Halten des Handbediengerätes unbeabsichtigt betätigt wurde. Derartige Risiken sind nunmehr eliminiert bzw. minimiert, nachdem ein bestimmter Zustimmtaster vom Bediener des Handbediengerätes bewusst aktiviert werden muss, bevor ein Zustimmungssignal abgegeben werden kann. Ferner wird dadurch eine besonders einfache und intuitive, sowie relativ rasche Selektion eines bestimmten Zustimmtasters aus einer Mehrzahl von Zustimmtastern ermöglicht.

Bei der Maßnahme gemäß Anspruch 9 ist sichergestellt, dass das Erkennen des Panik-Betätigungszustandes, d.h. des zweiten Betätigungszustandes, regelmäßig getestet wird. Dadurch wird auch bei ständig eingeschalteten bzw. bei ständig an eine Maschine angeschlossenen Handbediengeräten gewährleistet, dass ein zwischenzeitlich eingetretener Defekt an einem Zustimmtaster rechtzeitig vor einer beabsichtigten Verwendung erkannt und die weitere Verwendung des Handbediengerätes bzw. die Ausführung eines potentiell gefahrbringenden Maschinenkommandos bis zum Austausch oder der ordnungsgemäßen Instandsetzung unterbunden wird.

Durch die Maßnahme gemäß Anspruch 10 wird in vorteilhafter Art und Weise zunächst erreicht, dass der Zustimmtaster im Panikfall in den Panik-Betätigungszustand durchgedrückt wird und dadurch die technische Einrichtung bzw. Anlage stillgesetzt wird. Es wird jedoch vermieden, dass durch Loslassen und erneutes Zupacken am Zustimmtaster das Zustimmungssignal erneut und ungewollt freigegeben wird und die technische Einrichtung bzw. Anlage wieder anläuft bzw. die Bewegung oder der technische Prozess fortgesetzt wird. Auch durch diese Maßnahmen kann also die Sicherheit für Personen und/oder Gegenstände bzw. Anlagenteile deutlich erhöht werden.

Durch die vorteilhaften Maßnahmen gemäß Anspruch 11 wird erreicht, dass das Freigabe- bzw. Zustimmungssignal nur für eine vorgegebene, begrenzte Zeitspanne durchgehend aktiviert sein kann. Dadurch wird in effektiver Art und Weise verhindert, dass ein Zustimmtaster aus Bequemlichkeit mit irgendwelchen zusätzlichen Mitteln, beispielsweise Klebebändern oder Klemmelementen, dauerhaft in seinem Zustimmungs-Betätigungszustand fixiert wird und damit seine Sicherheitsfunktion verliert.

Bei der Ausgestaltung nach Anspruch 12 ist von Vorteil, dass der nahende Ablauf der vorgesehenen Zeitspanne dem Benutzer bereits vorab mitgeteilt bzw. signalisiert wird, sodass es bei der Bedienung einer Maschine nicht mitten unter einer Maschinenoperation zu einer ungewollten Unterbrechung kommt. Beispielsweise kann der Benutzer das Loslassen und erneute Betätigen des Zustimmtasters zu einem für ihn bzw. für die Maschinenoperation geeigneten Zeitpunkt vornehmen.

Bei den Maßnahmen gemäß Anspruch 13 ist von Vorteil, dass es nicht erforderlich ist, für eine weitere Wirksamkeit bzw. Freigabe des Zustimmtasters diesen loszulassen und erneut zu betätigen. Insbesondere kann eine Verlängerung bzw. ein Neustart des Zeitgliedes durch bewusste Betätigung eines speziell dafür vorgesehenen bzw. hierfür funktional bereitgestellten, multifunktionalen Eingabeelementes bewirkt werden und dadurch eine unpassende bzw. nachteilige Unterbrechung des Zustimmungssignals vermieden werden.

Durch die vorteilhaften Maßnahmen gemäß Anspruch 14 wird Einfehlersicherheit erzielt. Dadurch ist auchbeim Auftreten eines einzelnen Fehlers die zuverlässige Rücknahme des Zustimmungssignals weiterhin möglich. Anders ausgedrückt wird die technische Einrichtung bzw. die potentiell gefahrbringende Maschinenoperation nur genau dann freigegeben, wenn beide Erfassungskreise übereinstimmend Zustimmung erkennen und signalisieren. Die Sicherheit der Sicherheitsschalteinrichtung wird dadurch deutlich erhöht.

Bei den Maßnahmen gemäß Anspruch 15 ist von Vorteil, dass eine Freigabe eines Zustimmtasters zur Bereitstellung eines Zustimmungssignals nur dann erfolgt, wenn der Panik-Betätigungszustand mit jedem der mehreren Erfassungskreise übereinstimmend erfasst wird. Der Zustimmtaster ist somit nur dann aktivierbar, wenn der Panik-Betätigungszustand vollkommen fehlerfrei erfassbar ist. Bereits ein einzelner Fehler wird somit rechtzeitig aufgedeckt, bevor es durch Entstehung eines weiteren Fehlers zum Verlust der Sicherheit kommt.

Bei den Maßnahmen gemäß Anspruch 16 ist von Vorteil, dass die Aktivierung von Betriebsmodi des Handbediengerätes für die Abgabe potentiell gefahrbringender Steuerkommandos nur dann ermöglicht ist, wenn zuvor zumindest einem Zustimmtaster der Aktivmodus zugeordnet wird bzw. zugeordnet werden konnte und somit überprüft ist, dass erforderlichenfalls, d.h. in Not- bzw. Paniksituationen, auch eine Sicherheitsabschaltung oder eine zuverlässige Beendigung von möglicherweise kritischen Steuerkommandos tatsächlich vorgenommen werden kann.

Bei den Maßnahmen gemäß Anspruch 17 ist von Vorteil, dass sich ein Bediener relativ rasch und einfach einen Überblick darüber verschaffen kann, welchem Zustimmtaster der Aktivmodus zugeordnet ist. Ferner ist augenblicklich erfassbar, dass ein zur Verwendung vorgesehener Zustimmtaster unter Umständen noch nicht aktiviert ist. Eine unerwartet wirkungslose Bedienhandlung zufolge der Betätigung eines nicht aktivierten Zustimmtasters wird der Bedienperson somit rasch plausibel.

Von Vorteil ist auch eine Vorgangsweise gemäß Anspruch 18, da dadurch dem jeweiligen Benutzer eine unpassende bzw. wirkungslose Bedienhandlung entsprechend mitgeteilt und die Ursache plausibel gemacht wird und dadurch Verzögerungen in der beabsichtigten Bedienhandlung vermieden werden. Darüber hinaus können Verwirrungen bzw. Verwunderungen seitens des Benutzers vermieden werden, nachdem er auf unpassende Bedienungsversuche bzw. auf eine nutzlose Betätigung von Zustimmtastern hingewiesen wird. Insbesondere wird es dem Benutzer entsprechend signalisiert, wenn er versucht, mittels einem Zustimmtaster, welchem der Inaktivmodus zugeordnet ist, eine Zustimmung zur Ausführung von potentiell sicherheitskritischen Steuerkommandos abzugeben. Solche fehlerhaften Bedienungsversuche werdem dem Benutzer umgehend als unwirksam bzw. als nicht zielführend signalisiert. Insbesondere können dadurch Irrtümer seitens der Bedienperson möglichst rasch aufgehoben werden.

Die Aufgabe der Erfindung wird auch durch ein mobiles Handbediengerät gemäß Anspruch 19 gelöst. Die dadurch erzielbaren Effekte und technischen Wirkungen sind den vorhergehenden Beschreibungsteilen zu entnehmen.

Eine weitere, unabhängige Lösung für die vorhergehend genannte Aufgabenstellung ist im Anspruch 20 angegeben. Die damit erzielbaren Effekte und technischen Wirkungen sind ebenso den vorhergehenden Beschreibungsteilen zu entnehmen.

Insbesondere wird durch ein mobiles Handbediengerät nach Anspruch 19 bzw. durch eine Sicherheitsschalteinrichtung nach Anspruch 20 sichergestellt, dass mit einem Zustimmtasters erst dann ein Freigabe- bzw. Zustimmungssignal gesetzt werden kann, wenn an diesem Zustimmtaster zumindest der Panik-Betätigungszustand wirksam eingenommen werden kann, bevorzugt jedoch alle vorgesehenen Betätigungszustände - inklusive des Ruhezustandes - funktionswirksam eingenommen werden können. D.h., dass mittels einem Zustimmtaster ein Zustimmungssignal erst dann generiert bzw. abgegeben werden kann, nachdem an diesem Zustimmtaster zumindest die Einnehmbarkeit des Panik-Betätigungszustandes signaltechnisch überprüft wurde und das Überprüfungsergebnis positiv war.

Zum besseren Verständnis der Erfindung wird diese anhand der nachfolgenden Figuren näher erläutert.

Es zeigen jeweils in stark schematisch vereinfachter Darstellung:
- Fig. 1: eine beispielhafte Ausführungsform einer technischen Einrichtung, welche mittels mobilen Handbediengeräten bedien- bzw. beeinflussbar ist;
- Fig. 2: eine mögliche Ausführungsform eines Handbediengerätes umfassend eine Sicherheitsschalteinrichtung mit insgesamt drei verteilt angeordneten Zustimmtastern;
- Fig. 3: eine Sicherheitsschalteinrichtung umfassend drei beispielhafte, dreistufige Zustimmtaster in Verbindung mit einer elektronischen Auswerteschaltung für die jeweiligen Betätigungszustände und Betätigungsfolgen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

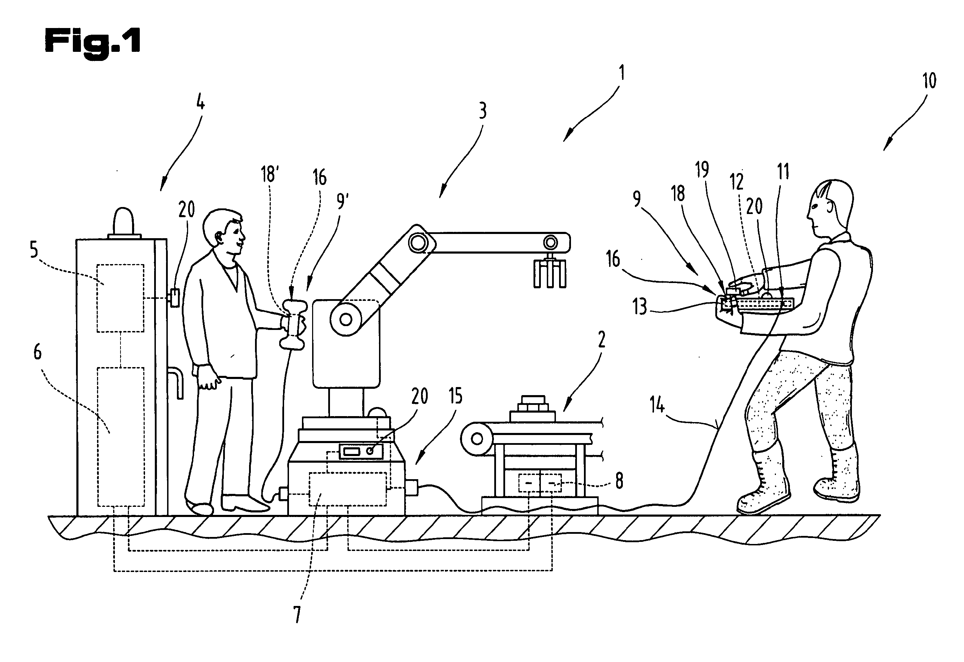

In Fig. 1 ist ein Ausführungsbeispiel einer technischen Einrichtung 1 zur automatischen, halbautomatischen und/oder manuellen Behandlung oder Bearbeitung von Objekten bzw. Werkstücken schematisch veranschaulicht. Gleichfalls kann eine technische Einrichtung 1 ausgebildet sein, welche sonstige technische Prozesse automatisiert ausführen bzw. überwachen kann. Insbesondere kann die technische Einrichtung durch eine Werkzeug- oder Bearbeitungsmaschine, wie z.B. durch eine Spritzgießmaschine oder eine Blechbiegemaschine gebildet sein.

Die technische Einrichtung 1 kann dabei auch eine oder mehrere elektrisch gesteuerte Maschinen 2, wie z.B. Bearbeitungsmaschinen oder Förder- bzw. Transportvorrichtungen und/oder Roboter 3 bzw. sonstige Manipulatoren und dgl., umfassen.

Neben diversen mechanischen Komponenten weist die technische Einrichtung 1 weiters wenigstens eine elektrische bzw. elektronische Steuereinrichtung 4 auf, welche eine zentrale Steuervorrichtung 5 oder mehrere dezentrale, miteinander verbundene oder vernetzte Steuervorrichtungen 6, 7, 8 für diverse Anlagenteile, beispielsweise für eine Maschine 2 und/oder einen Roboter 3, umfasst. Die dezentralen Steuervorrichtungen 6, 7, 8 sind dabei bevorzugt direkt dem zu steuernden Anlagenteil zugeordnet oder in der Nähe davon angeordnet.

An die Steuereinrichtung 4 der elektromechanischen Einrichtung 1 ist wenigstens ein mobiles Handbediengerät 9, 9' anbindbar. Das Handbediengerät 9, 9' ist dabei bevorzugt derart kompakt und leichtgewichtig aufgebaut, dass es von einem befugten Bediener 10 der technischen Einrichtung 1 mühelos tragbar ist.

Zur bedarfsweisen bzw. zeitweiligen Verbindung des Handbediengerätes 9 mit der Steuereinrichtung 4 oder wenigstens einer der Steuervorrichtungen 5-8 der technischen Einrichtung 1, weist das Handbediengerät 9 wenigstens eine Schnittstelle 11 auf. Diese Schnittstelle 11 ist üblicherweise an einer Steuervorrichtung 12 des Handbediengerätes 9 ausgebildet. Diese Steuervorrichtung 12 ist bevorzugt im Inneren eines Gehäuses 13 des Handbediengerätes 9 aufgenommen und so vor direktem Zugriff von Außen geschützt.

Die Schnittstelle 11 kann dabei zum Aufbau einer drahtgebundenen Verbindung via ein Kabel 14 und/oder zum Aufbau einer drahtlosen Wirkverbindung zur Steuereinrichtung 4 oder zu wenigstens einer der Steuervorrichtungen 5-8 der Einrichtung 1 ausgebildet sein. Via diese wenigstens eine drahtlose und/oder drahtgebundene Schnittstelle 11 am Handbediengerät 9 ist dieses also daten- bzw. signaltechnisch an die Steuereinrichtung 4 oder an einzelne der Steuervorrichtungen 5-8 bedarfsweise anbindbar. Hierfür ist an der Steuereinrichtung 4 oder an wenigstens einer der Steuervorrichtungen 5-8 der technischen Einrichtung 1 wenigstens eine damit korrespondierende Schnittstelle 15 ausgebildet.

Das mobile Handbediengerät 9 dient zumindest zur Beeinflussung der Betriebsfunktionen bzw. Arbeitsweise einer Maschine 2, eines Roboters 3 oder sonstiger technischer Anlagenteile eines allgemeinen technischen Prozess. Zusätzlich kann das Handbediengerät 9 zur Visualisierung von Prozessdaten und/oder zur Beobachtung von Arbeitsweisen und Betriebszuständen einer technischen Einrichtung 1 ausgebildet sein. Derartige Prozessbeeinflussungen bzw. Prozessvisualisierungen sind dabei nur dann möglich, wenn das mobile Handbediengerät 9 über die Schnittstelle 11 mit der korrespondierenden Schnittstelle 15 der jeweiligen Einrichtung 1 bzw. des jeweiligen Anlagenteils in ordnungsgemäßer daten- bzw. signaltechnischer Wirkverbindung steht.

Alternativ oder in Kombination zu wenigstens einem der zuvor genannten Verwendungszwecke kann das Handbediengerät 9 auch zur Programmierung der Abläufe, insbesondere der Bewegungs- bzw. Steuerabläufe, von mit Aktoren bzw. Sensoren versehenen Maschinen 2 oder Robotern 3 dienen. In einem derartigen Programmiermodus des Handbediengerätes 9 kann beispielsweise ein so genanntes "teaching" von Maschinen 2 oder Robotern 3 vorgenommen werden. Die dabei in einem Speicher hinterlegten Steuerungs- bzw. Bewegungsabläufe können nachfolgend von der Maschine 2 oder dem Roboter 3 selbsttätig bzw. automatisiert ausgeführt werden. Während im vollautomatischen Betrieb einer Maschine 2 oder eines Roboters 3 die Sicherheit von Personen in der Regel durch geschlossene und überwachte Schutzzäune oder ähnliche Barrieren sichergestellt wird, ist die Sicherheit beim so genannten "Teachen" von den jeweils vorgesehenen, sicherheitsgerichteten steuerungstechnischen Maßnahmen abhängig, nachdem bei der Durchführung verschiedener Programmier-, Einstell- und Einrichtarbeiten die Anwesenheit der Bedienperson im Nahbereich der potentiell gefährdenden Anlagenteile erforderlich ist. Eine sicherheitstechnisch wesentliche Maßnahme ist dabei die aktive und bewusste Freischaltung jeder potentiell gefahrbringenden Maschinenoperation sowie die visuelle Überwachung bis zu deren Abschluss durch eine entsprechend geschulte Bedienperson. Die Bedienperson hat zu diesem Zweck während der gesamten Ausführungzeit einer solchen Operation der Anlagensteuerung aktiv und bewusst zu signalisieren und damit zu bestätigen, dass ein ungestörter und ungefährdeter Betriebszustand vorliegt. Sobald dieses Bestätigungs- bzw. Freigabesignal nicht mehr signalisiert wird, wird die Anlage umgehend in einen sicheren Betriebszustand überführt und jede potentiell gefahrbringende Maschinenoperation schnellstmöglich abgebrochen.

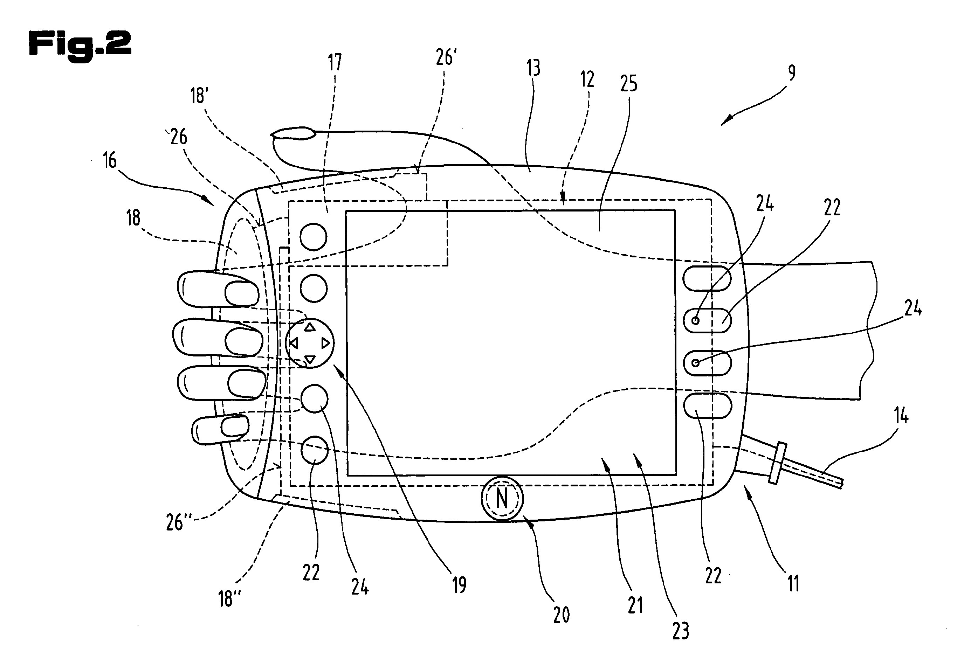

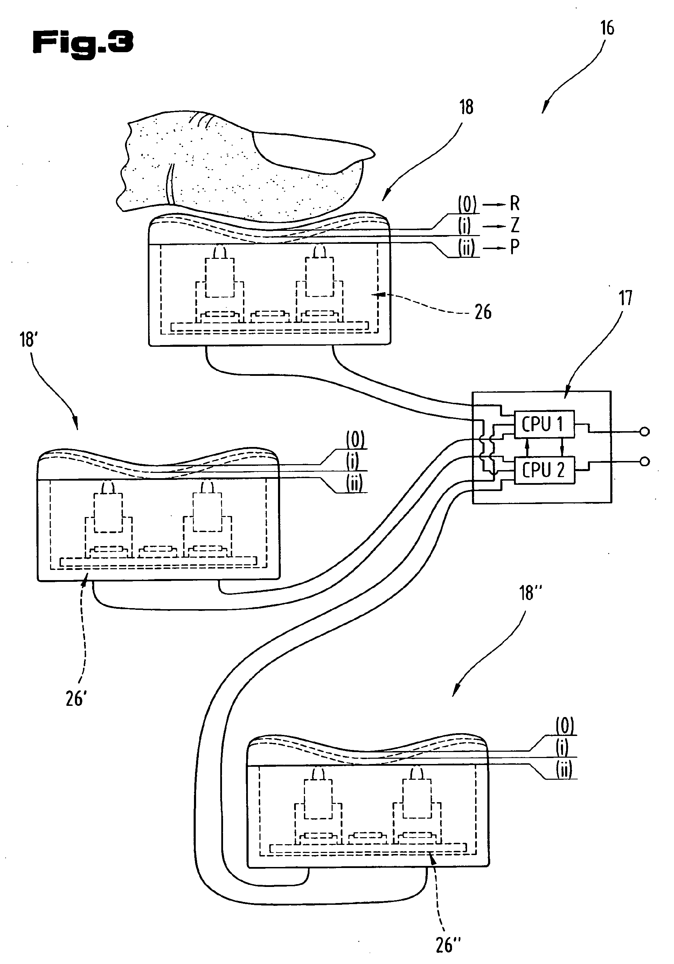

Das Handbediengerät 9 ist somit zur möglichst personen- bzw. anlagensicheren Abgabe oder Freischaltung von potentiell gefahrbringenden Steuerkommandos an eine mit diesem Handbediengerät 9 und/oder mit einem weiteren Handbediengerät 9' wirkungsverbundene, steuerbare technische Einrichtung 1, insbesondere einen Roboter oder eine Werkzeugmaschine, vorgesehen. Das zumindest eine Handbediengerät 9, 9' weist hierfür unter anderem wenigstens eine Sicherheitsschalteinrichtung 16 auf, wie dies am besten in Kombination von Fig. 1 mit den Fig. 2 und 3 ersichtlich ist.

Diese Sicherheitsschalteinrichtung 16 umfasst wenigstens eine elektronische Auswerteschaltung 17 und zumindest einen mit der Auswerteschaltung 17 signaltechnisch verbundenen Zustimmtaster 18, 18', 18". Zumindest einer der Zustimmtaster 18-18", vorzugsweise jedoch alle Zustimmtaster 18-18" sind dabei dreistufig ausgeführt. Insbesondere weist ein solcher Zustimmtaster 18-18" einen ohne Aufbringung einer Betätigungskraft selbsttätig eingenommenen Ruhezustand (0) und zwei durch unterschiedliche hohe Betätigungskräfte und/oder durch unterschiedliche Verstellwege festgelegte, aufeinanderfolgende Betätigungszustände (i, ii) auf. Der erste Betätigungszustand (i) definiert dabei einen Zustimmungs-Betätigungszustand (Z), mit welchem seitens des Benutzers eine Zustimmung zur Ausführung von potentiell gefahrbringenden Steuerkommandos signalisiert wird. Der zweite Betätigungszustand (ii) definiert einen Panik-Betätigungszustand (P), bei dessen Einnahme, ebenso wie bei Einnahme des Ruhezustandes (0), eine Beendigung des potentiell gefahrbringenden Steuerkommandos oder eine Überführung der technischen Einrichtung 1 in einen definierten, sicheren Betriebzustand erfolgt.

Die Sicherheitsschalteinrichtung 16 bzw. zumindest einer der Zustimmtaster 18-18" ist dabei zur Abgabe oder Freischaltung eines potentiell gefahrbringenden bzw. abzusichernden Steuerkommandos in Kombination mit einem dieses Steuerkommando absetzenden bzw. einleitenden Bedienelement 19 des Handbediengerätes 9, 9' in vorbestimmter Art und Weise zu betätigen. Insbesondere ist die fortgesetzte Ausführung eines potentiell gefahrbringenden Steuerkommandos nur dann ermöglicht, wenn zumindest einer der Zustimmtaster 18-18" vom Bediener in den ersten Betätigungszustand (i), d.h. in den Zustimmungs-Betätigungszustand (Z) überführt wird bzw. wurde und die Auswerteschaltung 17 diesen ersten Betätigungszustand (i) als gültigen Zustimmungszustand zur Ausführung eines potentiell gefahrbringenden Steuerkommandos erfasst bzw. ausgewertet hat. Die Abgabe und Ausführung eines potentiell gefahrbringenden Steuerkommandos erfolgt dann derart, dass bei einem während der Zeit der Ausführung betätigten Zustimmtaster 18-18" gleichzeitig das entsprechende Bedienelement 19 in der gewünschten Art und Weise bedient wird.

Die übliche bzw. konventionell vorgesehene Wirkungsweise eines dreistufigen Zustimmtasters 18-18" ist somit derart, dass im unbetätigten Ruhezustand (0) eine Ausführung von potentiell gefahrbringenden Steuerkommandos unterbunden ist oder beendet wird, während bei einer Einnahme des ersten Betätigungszustandes (i), d.h. des Zustimmungs-Betätigungszustandes (Z) seitens des Bedieners eine Zustimmung zur Ausführung von potentiell gefahrbringenden Steuerkommandos signalisiert wird. Der zweite Betätigungszustand (ii), d.h. der Panik-Betätigungszustand (P) des Zustimmtasters 18-18" wird von der Auswerteschaltung 17 als Panik-Stopp-Zustand gewertet, in welchem eine unmittelbare Beendigung von potentiell gefahrbringenden Steuerkommandos oder eine Überführung der technischen Einrichtung 1 in einen sicheren Betriebszustand vorgesehen ist.

Üblicherweise führen die Betätigungszustände "unbetätigt" und "Panik-Stopp" eines Zustimmtasters 18-18" an der Maschine 2 bzw. am Roboter 3 zu genau den selben Reaktionen, d.h. zur Stillsetzung der Antriebe bzw. zur Überführung in einen sicheren Betriebszustand. Panik-Stopp wird in der Regel also nicht kritischer behandelt, als das Loslassen des Zustimmtasters 18-18". Eine Unterscheidung der beiden Zustände Ruhezustand (0) und Panik-Betätigungszustand (P) erfolgt üblicherweise also nur in der Auswerteschaltung 17 im Handbediengerät 9, 9'.

Unabhängig von den oben beschriebenen Ausführungen eines Handbediengerätes 9 mit zumindest einem Bedienelement 19 bzw. mit diversen Ein- und/oder Ausgabeelementen, kann das Handbediengerät 9' auch bloß durch eine technisch relativ einfach aufgebaute, mobile Zustimmungsvorrichtung gebildet sein. Eine solche mobile Zustimmungsvorrichtung bzw. ein solches mobiles Handbediengerät 9' dient zur Abgabe eines Zustimmungssignals durch eine zweite Person, die sich gemeinsam mit der eigentlichen Bedienperson im Gefahren- bzw. Arbeitsbereich aufhält und die Bedienperson beispielsweise bei Service- oder Einstellarbeiten unterstützt. Die Ausführung potentiell gefahrbringender Steuerkommandos ist dabei nur dann und nur so lange möglich, als beide bzw. alle Personen Zustimmung signalisieren.

Am Handbediengerät 9, 9' kann weiters wenigstens eine Not-Aus-Schaltvorrichtung 20 ausgebildet sein, mit welcher nötigenfalls ein sofortiger Stop bzw. Not-Halt wenigstens von einem Teil einer funktional daran angebundenen Maschine 2, eines Roboters 3 oder eines technischen Prozesses eingeleitet werden kann. Diese Not-Aus-Schaltvorrichtung 20 ist vor allem vorgesehen, um sicherheitskritische oder gefahrbringende Situationen innerhalb der technischen Einrichtung 1 abzuwenden bzw. augenblicklich abzustellen. Derartige Not-Aus Schaltvorrichtungen 20 sind üblicherweise auch an sonstigen Anlagenteilen gut einsehbar, eindeutig erkennbar und leicht zugreifbar angeordnet, um notfalls rasch erreicht und betätigt werden zu können.

Die Not-Aus Schaltvorrichtungen 20 sind dabei in einen allgemein bekannten, nicht näher dargestellten Sicherheitsschaltkreis der Steuereinrichtung 4 eingebunden, welcher im wesentlichen bewirkt, dass beim Vorliegen eines Not-Aus Zustandes wenigstens die betroffenen, sicherheitskritischen Teile der Einrichtung 1 gesteuert stillgesetzt, abgeschaltet bzw. energielos geschaltet werden. Die Not-Aus-Schaltvorrichtung 20 am Handbediengerät 9 ist hierzu über die Schnittstelle 11 oder gegebenenfalls über ein eigenständiges Interface in den Sicherheitsschaltkreis der Steuereinrichtung 4 bzw. der technischen Einrichtung 1 einzubinden bzw. zumindest wirkungstechnisch mit diesem zu verbinden.

Wie am besten aus Fig. 2 ersichtlich ist, ist am Handbediengerät 9 zur Beeinflussung von Bewegungs- bzw. Funktionsabläufen eines technischen Prozesses bzw. einer technischen Einrichtung 1 wenigstens eine Eingabevorrichtung 21 ausgebildet. Diese wenigstens eine Eingabevorrichtung 21 kann aber auch dazu genutzt werden, um interne Abläufe bzw. Betriebszustände des Handbediengerätes 9 selbst beeinflussen, verändern bzw. einstellen zu können. Die Eingabevorrichtung 21 ist also zumindest zur Bedienung einer technischen Einrichtung 1 und bevorzugt auch zur Beeinflussung der Betriebsfunktionen des Handbediengerätes 9 vorgesehen. Hierfür kann die Eingabevorrichtung 21 wenigstens ein Eingabeelement 22 in Form von Tasten, Schalter, Schiebe- bzw. Drehregler und dg1. aufweisen. Zur Eingabe von Steuerbefehlen für die Ausführung von Bewegungsabläufen kann die Eingabevorrichtung 21 auch wenigstens einen Steuerhebel, beispielsweise in Form eines mehrachsigen Joysticks oder eines sonstigen Steuerorgans, beispielsweise in Art eines sogenannten Trackball, umfassen. Ebenso ist es denkbar, den Steuerhebel durch einen sogenannten "force-feedback-Steuerknüppel" zu bilden, mit welchem Rückwirkungen auf die Bedienungsperson erzeugt werden können. Alternativ oder in Kombination dazu können Bewegungssteuerungen auch über ein sogenanntes Cursor-Tastenfeld vorgenommen werden.

Zusätzlich zu den allgemeinen Eingabevorrichtungen 21 zur Eingabe von Steuerbefehlen, zur Auswahl von Betriebsfunktionen oder zur Navigation in Funktionsmenüs des Handbediengerätes 9 ist wenigstens eine rasch und sicher zugreifbare Not-Aus-Schaltvorrichtung 20 zur Bereitstellung der allgemein bekannten Not-Halt- bzw. Not-Stop-Funktion von wenigstens einem Teil einer an das Handbediengerät 9 angebundenen technischen Einrichtung 1 ausgebildet. Insbesondere wird bei Betätigung dieser Not-Aus-Schaltvorrichtung 20 die gesamte, an das Handbediengerät 9 signal- bzw. datentechnisch angebundene technische Einrichtung 1 oder wenigstens ein sicherheitkritischer Anlagenteil in einen sicheren Zustand versetzt. Ein sicherer Betriebszustand einer technischen Einrichtung 1, einer Maschine 2, eines Roboters 3 oder dgl. ist beispielsweise dann gegeben, wenn potentiell gefährdende Vorgänge für Lebewesen oder Objekte, insbesondere bestimmte Bewegungsvorgänge, Bearbeitungsvorgänge, Fördervorgänge oder Bestrahlungsvorgänge wirksam unterbunden werden. Dies geschieht in vielen Fällen durch eine Unterbrechung der Energiezufuhr zu den Aktoren bzw. Antriebsaggregaten der Anlage bzw. des jeweiligen Anlagenteils.

Die Not-Aus-Schaltvorrichtung 20 des Handbediengerätes 9 ist während dem funktionsfähigen Betriebszustand in den Sicherheitsschaltkreis der technischen Einrichtung 1 eingebunden oder daran angebunden. Ein derartiger Sicherheitsschaltkreis kann neben der Bereitstellung der Not-Aus-Funktion auch Zustimmsignale von den Zustimmtastern 18-18", insbesondere von deren Auswerteschaltung 17, Zustandsinformationen von Schutztüren, Schutzgittenz oder Lichtschranken, Parkpositionsinformationen von bestimmten Maschinenkomponenten oder dgl. umfassen bzw. führen.

Durch manuelle Betätigung von einer am Handbediengerät 9 oder an einer sonstigen Stelle der technischen Einrichtung 1 angeordneten und an den Sicherheitsschaltkreis angeschlossenen Not-Aus-Schaltvorrichtung 20 wird die jeweilige Maschine 2 oder der entsprechende Maschinenteil augenblicklich in einen sicheren Zustand überführt. Dieser sichere Betriebszustand bleibt aufrecht, bis alle Not-Aus-Schaltvornchtungen 20 einer technischen Einrichtung 1 oder eines Anlagenteils bewusst wieder in einen unbetätigten Zustand zurückgeführt werden.

Die am Handbediengerät 9 ausgebildeten Zustimmtaster 18-18" bewirken, dass sicherheitskritische Bewegungen bzw. Funktionen via das mobile Handbediengerät 9 nur dann ausgeführt werden, wenn wenigstens einer der gegebenenfalls mehrfach angeordneten Zustimmtaster 18-18" in vordefinierter Art und Weise betätigt ist. Mit diesen Zustimmtastern 18-18" kann also vermieden werden, dass sicherheitskritische bzw. gefährliche Funktionen, insbesondere Bewegungsfunktionen, unbeabsichtigt bzw. ungewollt ausgeführt werden. Insbesondere werden ausschließlich bei bewusster, definierter Betätigung wenigstens eines Zustimmtasters 18-18", insbesondere bei Einnahme des Zustimmungs-Betätigungszustandes (Z), die entsprechenden Steuerbefehle über die Schnittstelle 11 vom Bedienelement 19 und/oder von einem Cursor-Tastenfeld und/oder von einem berührungssensitiven Bildschirm 25 an die Steuereinrichtung 4 einer technischen Einrichtung 1 übermittelt. D.h., dass nur während entsprechender Betätigung zumindest eines Zustimmtasters 18-18" eine Ausführung bzw. Umsetzung der unter Umständen gefahrbringenden Steuerbefehle freigegeben ist. Die Zustimmtaster 18-18" sind dabei von wenigstens einem Finger bzw. vom Daumen und/oder von mehreren Fingern einer Hand einer Bedienungsperson betätigbar, wie die vor allem der Fig. 2 beispielhaft zu entnehmen ist. Die Betätigung eines Zustimmtasters 18-18" wirkt in der Regel über den eigenständig ausgeführten Sicherheitskreis direkt auf die Aktoren bzw. Antriebseinheiten einer Maschine. Eine Stillsetzung ist daher selbst bei einem Defekt in der Maschinensteuerung zuverlässig möglich.

Um das Handbediengerät 9 auch als Beobachtungsgerät nutzen zu können, ist bevorzugt auch wenigstens eine Ausgabevorrichtung 23 ausgebildet. Diese wenigstens eine Ausgabevorrichtung 23 umfasst mehrere optische Signalisierungselemente 24, beispielsweise Leuchtdioden, Glimmlampen oder dgl., über welche beispielsweise der jeweilige Schaltzustand oder diverse Alarmzustände signalisiert werden können. Als weitere optische, visuell erfassbare Ausgabevorrichtung 23 ist bevorzugt auch ein berührungssensitiver Bildschirm 25, insbesondere ein sogenannter Touch-Screen vorgesehen, welcher auch als baulich kombinierte Ein- und Ausgabevorrichtung 21, 23 bezeichnet werden kann. Auf diesem bevorzugt grafikfähigen Bildschirm 25 können unterschiedlichste Grafiken, Symbole und Abläufe dargestellt und visuell erfasst werden. Zudem können durch Berühren bestimmter Zonen der grafischen Benutzeroberfläche des Bildschirms 25 gezielte Eingaben bzw. Selektionen vorgenommen werden. Dieser berührungssensitive Bildschirm 25 nimmt bevorzugt einen großen Teilbereich der Oberseite des Gehäuses 13 des Handbediengerätes 9 ein und stellt das wesentliche Element zur Ein- und Ausgabe von Befehlen bzw. Daten dar.
Selbstverständlich ist es auch möglich, jegliche andere, aus dem Stand der Technik bekannten Gehäuseformen vorzusehen. So ist es nicht zwingend erforderlich, ein in Draufsicht rechteckiges oder T-förmiges Gehäuse 13 auszubilden, sondern ist es selbstverständlich auch möglich, elliptische oder kreisrunde Gehäuseformen zu wählen.

Vor allem dann, wenn die sicherheitsrelevante Sicherheitsschalteinrichtung 16 zumindest einen, insbesondere zwei oder mehr Zustimmtaster 18-18" umfasst, ist es wesentlich, dass die wenigstens eine elektronische Auswerteschaltung 17, welche auch durch die Steuervorrichtung 12 gebildet bzw. in diese integriert sein kann, die jeweiligen Ruhezustände (0) bzw. Betätigungszustände (i, ii) der Zustimmtaster 18-18" derart auswertet, dass ein möglichst geringes Gefahrenpotential für Personen, insbesondere Bedienpersonen und/oder für technische Komponenten der technischen Einrichtung 1 gewährleistet ist.

Wesentlich ist dabei, dass dem zumindest einen Zustimmtaster 18-18" des Handbediengeräts 9 bzw. der zusammengehörenden Gruppe von Zustimmtastern 18-18" an einer Mehrzahl von Handbediengeräten 9, 9' entweder ein Aktivmodus zugeordnet wird, in welchem bei Einnahme des ersten Betätigungszustandes (i), d.h. des Zustimmungs-Betätigungszustandes (Z), ein Zustimmungszustand zur Ausführung von potentiell gefahrbringenden Steuerkommandos signalisiert oder bereitgestellt werden kann, oder ein Inaktivmodus zugeordnet wird, in welchem eine Signalisierung oder Bereitstellung eines Zustimmungszustandes grundsätzlich unterdrückt oder nicht ermöglicht ist. Das heißt, dass jedem der Zustimmtaster 18-18" entweder ein Aktivmodus oder ein Inaktivmodus zugeordnet wird. Diese Zuordnung bzw. Zuweisung der beiden Betriebs- bzw. Funktionsmodi erfolgt bevorzugt seitens der Auswertevorrichtung 17 bzw. werden in der Auswerteschaltung 17 die jeweiligen Zuordnungen des Aktivmodus oder des Inaktivmodus getroffen bzw. hinterlegt.

Eine Einleitung eines Zustimmungszustandes bzw. eine Erwirkung eines Zustimmungssignals zur Ausführung von potentiell gefahrbringenden Steuerkommandos ist dabei also nur an jenem Zustimmtaster 18-18" bzw. an jenen Zustimmtastern 18-18" ermöglicht, welchen der Aktivmodus zugeordnet ist bzw. welche für die Auswerteschaltung 17 als aktiv gelten bzw. als freigegeben vermerkt sind. Insbesondere ist unter dem Ausdruck "Aktivmodus" eine Bereitschaft bzw. Fähigkeit des jeweiligen Zustimmtasters 18-18" zur Signalisierung oder Abgabe eines Zustimmungszustandes zu verstehen. Jedenfalls ist dann, wenn einem Zustimmtaster 18-18" der Inaktivmodus zugeordnet ist, die Einleitung bzw. Generierung eines Zustimmungssignals via diesen quasi inaktiven Zustimmtaster 18-18" nicht ermöglicht.

Wesentlich ist dabei, dass erst bei oder nach einer durch die Auswerteschaltung 17 signaltechnisch erfassten Einnahme zumindest des zweiten Betätigungszustandes (ii), d.h. des Panik-Betätigungszustandes (P) oder des Panik-Betätigungszustandes (P) und auch des Ruhezustandes (0), dem jeweiligen Zustimmtaster 18-18" der Aktivmodus zugeordnet wird. Dadurch ist in vorteilhafter Art und Weise sichergestellt, dass mit einem Zustimmtaster 18-18" nur dann ein Zustimmungssignal abgegeben bzw. initiiert werden kann, wenn an diesem Zustimmtaster 18-18" der Panik-Stopp-Zustand bzw. der Panik-Betätigungszustand (P) einnehmbar und zuverlässig erfassbar ist bzw. die Zustimmung zur Ausführung eines potentiell gefahrbringenden Steuerkommandos von der Bedienperson tatsächlich wieder zurückgenommen werden kann. Das heißt, dass zuvor überprüft wird, ob der Zustimmtaster 18-18" funktioniert bzw. ob dessen plangemäße Funktionalität vorliegt, bevor ihm der Aktivmodus zugeordnet wird. Somit ist sichergestellt, dass mit diesem Zustimmtaster 18-18" erforderlichenfalls, insbesondere im Not- bzw. Panik-Fall, der Panik-Stopp-Zustand auch tatsächlich eingeleitet bzw. eingenommen und entsprechend wirksam werden kann. Es ist somit sichergestellt, dass erst dann ein Zustimmungssignal abgegeben werden kann, wenn zuvor die Funktion und Erfassung zumindest des Panik-Betätigungszustandes (P) oder alternativ des Panik-Betätigungszustandes (P) und des Ruhezustandes (0) technisch überprüft und festgestellt wurde.

Erfindungsgemäß erfolgt also die Sperre der Zustimmungs-Funktionalität eines Zustimmtasters 18-18" so lange, bis der Zustimmtaster 18-18" zumindest einmalig in den zweiten Betätigungszustand (ii), d.h. in den Panik-Betätigungszustand (P) versetzt wurde. Erst dann erfolgt eine Freigabe der Zustimmungs-Funktionalität. Damit ist sichergestellt, dass die Freigabe bzw. Bereitstellung eines Zustimmungssignals nur dann möglich ist, wenn dieses Zustimmungssignal bei einer Überführung des Zustimmtasters 18-18" in den Panik-Betätigungszustand (P) auch wieder wirksam entzogen werden kann.

Gemäß einer vorteilhaften Weiterbildung der Erfindung wird sichergestellt, dass bei der Verwendung mehrerer Zustimmtaster 18-18" an einem Handbediengerät 9, 9" immer nur einer der Zustimmtaster 18-18" für die Aktivierung des Freigabe- bzw. Zustimmungssignals freigeschaltet ist. Die Auswahl des Zustimmtasters 18-18" erfolgt dabei dadurch, dass der gewünschte Zustimmtaster 18-18" in den Panik-Betätigungszustand (P) gebracht wird. Damit ist sichergestellt, dass nach dem Einschalten des Handbediengerätes 9, 9' und noch vor Abgabe eines Freigabe- bzw. Zustimmungssignals der verwendete Zustimmtaster 18-18" vollständig getestet ist. Dabei muss aber nicht zwingend jeder vorhandene Zustimmtaster 18-18" betätigt werden, sondern eben nur jener oder jene, der bzw. die auch tatsächlich zur Verwendung vorgesehen ist bzw. sind. Ferner ist dabei von besonderem Vorteil, dass an den nicht zur Verwendung vorgesehenen Zustimmtastern 18-18" nicht versehentlich ein Zustimmungssignal ausgelöst werden kann.

Die erfindungsgemäßen Maßnahmen ermöglichen also auch eine einfache, rasche und intuitive Selektion eines Zustimmtasters 18-18" aus einer Mehrzahl von wahlweise verwendbaren Zustimmtastern 18-18".

Standardmäßig erfolgt eine Generierung bzw. Bereitstellung eines Freigabe- bzw. Zustimmungssignals nur beim Übergang des Betätigungszustandes eines dreistufigen Zustimmtasters 18-18" ausgehend vom Ruhezustand (0) in den Zustimmungs-Betätigungszustand (Z). Damit ist sichergestellt, dass beim Loslassen des Zustimmtasters 18-18" ausgehend vom Panik-Betätigungszustand (P) über den Zustimmungs-Betätigungszustand (Z) in den unbetätigten Ruhezustand (0) nicht vorübergehend und unbeabsichtigt eine kurzzeitige Zustimmung signalisiert wird.

Entsprechend einer vorteilhaften Weiterbildung erfolgt die Zuordnung des Aktivmodus zu einem Zustimmtaster 18-18" erst nach mehrmaligem, insbesondere nach zweimaligem Erfassen des zweiten Betätigungszustandes (ii), d.h. nach mehrmaliger Erfassung des Panik-Betätigungszustandes (P). Zweckmäßig ist es dabei, wenn diese Erfassung innerhalb einer vorbestimmten Zeitspanne, welche durch die Auswerteschaltung 17 bzw. durch ein Zeitglied der Auswerteschaltung 17 definiert ist, zu erfolgen hat und ein zwischenzeitliches Nichterfassen bzw. Nichtvorliegen des Panik-Betätigungszustandes (P) gegeben ist. Das heißt, dass das Aufeinanderfolgen zweier oder mehrerer Panik-Betätigungszustände (P) innerhalb einer vordefinierten Zeitspanne zu erfolgen hat, um daraufhin dem entsprechenden Zustimmtaster 18-18" den Aktivmodus zuzuordnen. Außerhalb dieser vorbestimmten Zeitspanne von beispielsweise 2 bis etwa 5 Sekunden für das Auftreten zweier oder mehrerer Panik-Betätigungszustände (P), welche mittels nur einem der Zustimmtaster 18-18" abgegeben werden, erfolgt keine Zuordnung des Aktivmodus zu diesem Zustimmtaster 18-18".

Entsprechend einer vorteilhaften Ausführung ist es zweckmäßig, einen Zustimmtaster 18-18", welchem bereits der Aktivmodus zugeordnet ist, in den Inaktivmodus zu überführen, nachdem er in den Panik-Betätigungszustand (P) überführt wurde bzw. nachdem über diesen Zustimmtaster 18-18" der Panik-Betätigungszustand (P) wirksam signalisiert wurde. Dadurch wird vermieden, dass durch unbewusstes bzw. unbedachtes, erneutes Zupacken der Bedienperson an einem Zustimmtaster 18-18", bei welchem zuvor der Panik-Betätigungszustand (P) eingenommen wurde, unmittelbar darauf wieder wirksam in den ersten Betätigungszustand (i), d.h. in den Zustimmungs-Betätigungszustand überführt wird, in welchem sodann ein Zustimmungszustand signalisiert sein würde. Durch die Inaktivschaltung eines Zustimmtasters 18-18", welcher zuvor in den Panik-Betätigungszustand (P) überführt wurde, kann eine unbedachte bzw. unmittelbar anschließende Überführung in den Zustimmungs-Betätigungszustand (Z) nicht zur Abgabe eines eigentlich unbeabsichtigten bzw. ungewollten und fallweise kritischen Zustimmungssignals führen. Weiters lassen sich durch diese Ausführung die einzelnen Zustimmtaster 18-18" vom Benutzer selektiv aktivieren und deaktivieren.

Eine vorteilhafte, optionale Verfahrensmaßnahme, welche bevorzugt ebenso via die Auswerteschaltung 17 umgesetzt werden kann, liegt darin, dass die Signalisierung eines Zustimmungszustandes unterdrückt oder zurückgenommen wird, wenn ein Zustimmtaster 18-18" unabhängig vom Vorliegen des Aktivmodus oder des Inaktivmodus an diesem Zustimmtaster 18-18" in den zweiten, d.h. in den Panik-Betätigungszustand (P) versetzt wird. Demzufolge ist es steuerungstechnisch bzw. auswertungstechnisch egal, ob ein Zustimmtaster 18-18" den Aktiv- oder Inaktivmodus aufweist; eine Abgabe bzw. Signalisierung eines Panik-Betätigungszustandes (P) ist also in jedem Fall ermöglicht.

Die Auswerteschaltung 17 kann weiters dafür sorgen, dass die Signalisierung oder Bereitstellung eines Zustimmungszustandes zur Ausführung potentiell gefahrbringender Steuerkommandos unterdrückt oder zurückgenommen wird, wenn alle Zustimmtaster 18-18", denen der Aktivmodus zugeordnet ist, im unbetätigten Ruhezustand (0) vorliegen. Demzufolge ist dann, wenn keiner der gegebenenfalls mehreren, im Aktivmodus befindlichen Zustimmtaster 18-18" betätigt ist, das Zustimmungssignal zurückgenommen bzw. nicht vorliegend. Das heißt, dass ohne einer aktiven Zustimmung eines Benutzers an einem aktiven bzw. freigegeben Zustimmtaster 18-18" kein Zustimmungssignal vorliegt bzw. abgegeben wird. Ferner wird dann, wenn ein nicht aktiver Zustimmtaster 18-18", d.h. ein Zustimmtaster 18-18" an welchem der Inaktivmodus vorliegt, vom Bediener in den ersten Betätigungszustand (i), d. h. in den Zustimmungs-Betätigungszustand (Z) versetzt wird, dieser Zustimmungs-Betätigungszustand (Z) seitens der Auswerteschaltung 17 ignoriert bzw. nicht umgesetzt.

Analog zur vorhergehend beschriebenen Verfahrensmaßnahme wird von der Auswerteschaltung 17 sichergestellt, dass der Zustimmungszustand bzw. ein Zustimmungssignal unterdrückt oder zurückgenommen wird, wenn jedem Zustimmtaster 18-18" der Inaktivmodus zugeordnet ist. Das heißt, dass mit durchwegs in den Inaktivmodus versetzten Zustimmtastern 18-18" kein Zustimmungszustand bzw. kein Signal zur Kennzeichnung von Zustimmung vorliegen kann.

Weiters ist es zweckmäßig, wenn von der Auswerteschaltung 17 dahingehend verfahren wird, dass bei Zuordnung des Aktivmodus zu einem Zustimmtaster 18-18" innerhalb einer Gruppe von mehreren Zustimmtastern 18-18", allen anderen bzw. den restlichen Zustimmtastern 18-18" dieser Gruppe der Inaktivmodus zugeordnet wird. Durch diese Maßnahme ist immer nur einer der gegebenenfalls mehreren Zustimmtastern 18-18" aktiv. Die Gefahr des unbeabsichtigten Auslösens einer Zustimmung mit einem anderen, als in der jeweiligen Handhabungssituation vorgesehenen bzw. bewusst ausgewählten Zustimmtaster 18-18" wird somit zuverlässig vermieden.

Eine zweckmäßige Verfahrensmaßnahme liegt auch darin, eine Möglichkeit zur generellen Deaktivierung der Zustimmungsfunktionalität der Zustimmtaster 18-18" vorzusehen. Insbesondere kann als vorteilhafte, optionale Verfahrensmaßnahme vorgesehen sein, jedem Zustimmtaster 18-18" den Inaktivmodus zuzuordnen, nachdem das Handbediengerät 9, 9' eingeschaltet wurde oder wenn die Versorgungsspannung für das Handbediengerät 9, 9' oder für die Sicherheitsschalteinrichtung 16 angelegt bzw. aktiviert wird. Zudem bzw. unabhängig davon kann nach dem Anlegen eines gemeinsamen Reset- bzw. Rücksetzsignals für die Auswerteschaltung 17 oder die Zustimmtaster 18-18", oder nach dem Übersenden eines Initialisierungskommandos, jedem der Zustimmtaster 18-18" der Inaktivmodus zugeordnet werden.

Zweckmäßig kann es weiters sein, beim Übergang des Betätigungszustandes eines Zustimmtasters 18-18" vom Zustimmungs-Betätigungszustand (Z) in den Panik-Betätigungszustand (P) oder vom Panik-Betätigungszustand (P) in den Zustimmungs-Betätigungszustand (Z) ein Zeitglied zu starten und nach Ablauf einer durch dieses Zeitglied vorgegebenen Zeitspanne diesem Zustimmtaster 18-18" oder jedem der ausgebildeten Zustimmtaster 18-18" den Inaktivmodus zuzuordnen. Das heißt, dass beim Wechsel bzw. Übergang vom Zustimmungs-Betätigungszustand (Z) in den Panik-Betätigungszustand (P) oder umgekehrt ein Zeitglied gestartet bzw. neu gestartet wird und nur innerhalb der durch das Zeitglied vordefinierten Zeitspanne dieser Zustimmtaster oder jeder der ausgebildeten Zustimmtaster den Aktivmodus zugeteilt bekommt. Durch diese Maßnahme ist sichergestellt, dass das Erkennen des zweiten Betätigungszustandes (ii), d.h. des Panik-Betätigungszustandes (P), regelmäßig getestet wird. Dadurch ist auch bei ständig eingeschalteten Handbediengeräten 9, 9' sichergestellt, dass vor der möglichen Abgabe eines Zustimmungssignals der letzte Überprüfungszeitpunkt des Panik-Betätigungszustandes (P) nicht länger als eine gewisse maximale Zeitspanne zurückliegt und damit seine Funktion ausreichend sichergestellt ist.

Entsprechend einer vorteilhaften Weiterbildung ist vorgesehen, dass nach dem Übergang des Betätigungszustandes eines Zustimmtasters 18-18" ausgehend vom Panik-Betätigungszustand (P) in den Zustimmungs-Betätigungszustand (Z) oder ausgehend vom Panik-Betätigungszustand (P) über den Zustimmungs-Betätigungszustand (Z) in den Ruhezustand (0) ein Zeitglied gestartet wird, bis zu dessen Ablauf die Signalisierung oder Bereitstellung eines Zustimmungszustandes gesperrt bleibt. Das heißt, dass nach einer Überführung eines Zustimmtasters 18-18" ausgehend vom Panik-Betätigungszustand (P) in den Zustimmungs-Betätigungszustand (Z) oder ausgehend vom Panik-Betätigungszustand (P) in den Ruhezustand (0) ein Zeitglied gestartet wird, innerhalb dessen vordefinierter Zeitspanne eine Signalisierung oder Bereitstellung eines Zustimmungszustandes unterdrückt wird. Eine erneute Zustimmung ist also während dieser vordefinierten Zeitspanne nicht ermöglicht. Durch diese Maßnahme wird vermieden, dass im Panik-Fall zunächst zwar einer der Zustimmtaster 18-18" durchgedrückt und die Anlage bzw. technische Einrichtung 1 stillgesetzt wird, danach jedoch unter Umständen durch Loslassen und erneutes Zupacken unabsichtlich wieder das Zustimmungssignal abgegeben wird und die technische Einrichtung 1 unbeabsichtigt wieder anläuft.

Zweckmäßig kann es auch sein, nach dem Aktivieren des Zustimmungszustandes ausgehend von der Auswerteschaltung 17 ein Zeitglied mit vorbestimmter Zeitspanne zu starten und nach Ablauf dieser Zeitspanne die Abgabe bzw. Bereitstellung des Zustimmungszustandes zu beenden. Durch diese Maßnahme wird erreicht, dass das Zustimmungssignal nur für eine vorgegebene, begrenzte Zeitspanne durchgehend aktiviert sein kann. Dadurch wird verhindert, dass der Zustimmtaster mit manipulatorischen Maßnahmen dauerhaft in Zustimmungsposition fixiert wird und damit seine Sicherheitsfunktion verliert.

Entsprechend einer vorteilhaften Weiterbildung kann vorgesehen sein, dass vor Ablauf dieser vorbestimmten Zeitspanne ein Signalisierungselement 24 aktiviert wird, welches eine gegenüber dem Benutzer des Handbediengeräts 9, 9' optische, akustische oder taktile Signalwirkung ausübt. Dadurch wird der nahende Ablauf der vorbestimmten Zeitspanne dem Benutzer bereits vorab, z.B. akustisch, optisch und/oder taktil mitgeteilt, sodass es bei der Bedienung einer Maschine nicht während einer Maschinenoperation zu einer ungewollten bzw. unpassenden Unterbrechung kommt. Insbesondere kann der Benutzer das Wiederholen bzw. erneute Bestätigen des Zustimmungs-Betätigungszustandes (Z) zu einem für ihn geeigneten, späteren Zeitpunkt vornehmen. Das heißt, dass das Loslassen und erneute Betätigen des Zustimmtasters 18-18" zu einem für die Maschinenoperation bzw. den Bediener optimalen Zeitpunkt vorgenommen werden kann.

Analog dazu kann vorgesehen sein, dass vor Ablauf der vorbestimmten Zeitspanne vom Benutzer des Handbediengeräts 9, 9' ein Eingabeelement 22 zur Verlängerung der vorbestimmten Zeitspanne oder zum Neustart des Zeitgliedes betätigt werden kann.

Vorzugsweise erfolgt eine Erfassung des Zustimmungs-Betätigungszustandes (Z) und des Panik-Betätigungszustandes (P) eines Zustimmtasters 18-18", bevorzugt auch des Ruhezustandes (0) eines Zustimmtasters 18-18", durch zwei- oder mehrkreisig redundante, sensorische Erfassungskreise 26, 26', 26". Die jeweiligen Erfassungssignale der Erfassungskreise 26-26" werden sodann von der Auswertungsschaltung 17 zwei- oder mehrkreisig ausgewertet. Das heißt, ein Zustimmungszustand an den Zustimmtastern 18-18" wird zwei- oder mehrkreisig bzw. zwei- oder mehrkanalig durch unabhängig arbeitende Schaltungsteile ermittelt und fehlersicher, insbesondere einfehlersicher und vorzugsweise zwei- oder mehrkanalig an die steuerbare technische Einrichtung 1 übertragen. Dadurch wird technische Einfehlersicherheit erzielt, wonach auch beim Auftreten eines einzelnen Fehlers die zuverlässige Rücknahme des Zustimmungssignals noch immer möglich ist. Insbesondere ist nur dann, wenn die Erfassungskreise 26; 26'; 26" eines Zustimmtasters 18-18" übereinstimmend Zustimmung erkennen und signalisieren, die technische Einrichtung 1 bzw. die potentiell gefahrbringende Maschinenoperation tatsächlich freigegeben.

Der Begriff der Zwei- oder Mehrkreisigkeit bezeichnet dabei den Umstand, dass jeder Erfassungskreis 26, 26', 26" tatsächlich zweifach bzw. mehrfach ausgeführt ist. Ein sensorischer Erfassungskreis 26; 26'; 26" umfasst dabei eine Zwei- oder Mehrfachanordnung von eigenständigen Sensoren, wie z.B. elektrischen Kontakten, eine Zwei- oder Mehrfachanordnung von eigenständigen Signalübertragungsstrecken bzw. Leitungen, sowie eine Zwei- oder Mehrfachanordnung von eigenständig arbeitenden Teilerfassungs- bzw. Teilauswerteschaltungen, welche als Teil der gesamten Auswerteschaltung 17 ausgebildet sein können, wie dies in Fig. 3 schematisch veranschaulicht wurde.

Zweckmäßig ist es weiters, wenn seitens der Auswerteschaltung 17 eine Zuordnung des Aktivmodus nur dann erfolgt, wenn die Einnahme des zweiten Betätigungszustandes (ii), d.h. des Panik-Betätigungszustandes (P) durch jeden der redundanten, sensorischen Erfassungskreise 26-26" des betreffenden Zustimmtasters 18-18" festgestellt wurde. Ferner ist es zweckmä-βig, eine Aktivierung eines Programmier- bzw. so genannten Teach-Modus oder eine Freischaltung von Bedienelementen 19 zur Abgabe von potentiell gefahrbringenden Steuerbefehlen seitens der Auswerteschaltung 17 nur dann vorzunehmen, wenn zumindest einem Zustimmtaster 18-18" der Aktivmodus zugeordnet ist. Insbesondere kann bereits beim Versuch der Aktivierung eines Programmier- oder Teach-Modus die Bedienperson auf die dafür erforderliche oder zweckmäßige Aktivierung zumindest eines Zustimmtasters 18-18" hingewiesen bzw. erinnert oder dazu aufgefordert werden.

Standardmäßig ist es, wenn das Freigabe- bzw. Zustimmungssignal an die steuerbare technische Einrichtung 1 nur dann gesetzt wird, wenn der Übergang des Betätigungszustandes eines Zustimmtasters 18-18" vom Ruhezustand (0) in den Zustimmungs-Betätigungszustand (Z) für jeden der redundanten sensorischen Erfassungskreise 26-26" festgestellt wurde. D.h., dass alle vorgesehenen Erfassungskreise 26-26" übereinstimmend Zustimmung erfassen müssen, damit das Zustimmungssignal tatsächlich gesetzt wird.

Entsprechend einer vorteilhaften Weiterbildung wird mittels einer visuell erfassbaren Ausgabevorrichtung 23, beispielsweise mittels einem optischen Signalisierungselement 24 oder mittels einem Bildschirm 25 des Handbediengerätes 9, 9' oder mittels einem optischen Leuchtmittel am Zustimmtaster 18-18" oder nahe dem Zustimmtaster 18-18", eine Darstellung oder Information darüber ausgeben, ob einem Zustimmtaster 18-18" und gegebenenfalls welchem Zustimmtaster 18-18" bzw. welchen Zustimmtastern 18-18" der Aktivmodus zugeordnet ist. Insbesondere ist dadurch für einen Bediener des Handbediengeräts 9, 9' rasch und unmissverständlich erkennbar, ob einem Zustimmtaster 18-18" der Aktivmodus zugeordnet ist bzw. welchem Zustimmtaster 18-18" der Aktivmodus zugeordnet ist.

Entsprechend einer vorteilhaften Ausgestaltung kann auch vorgesehen sein, dass mittels einer visuell erfassbaren Ausgabevorrichtung 23, beispielsweise mittels einem berührungssensitiven Bildschirm 25 des Handbediengeräts 9, 9' oder mittels einem optischen Leuchtmittel bzw. Signalisierungselement 24 am Zustimmtaster 18-18" oder nahe dem Zustimmtaster 18-18", ein Signal oder eine Information ausgegeben wird, wenn ein Zustimmtaster 18-18", welchem der Inaktivmodus zugeordnet ist, nur bis in den ersten Betätigungszustand (i), d.h. nur bis in den Zustimmungs-Betätigungszustand (Z) überführt wird. Das heißt, dass dann, wenn ein grundsätzlich inaktiver Zustimmtaster 18-18", also ein Zustimmtaster 18-18" der sich im Inaktivmodus befindet, vom Bediener in den Zustimmungs-Betätigungszustand (Z) überführt wird, obwohl diese Funktionalität aufgrund des Inaktivmodus unterdrückt wird, so wird dies dem Bediener entsprechend mitgeteilt. Dadurch werden Verzögerungen bei der beabsichtigten Bedienhandlung bzw. Verwirrungen wegen der ausbleibenden Wirkung und gegebenenfalls weitere erfolglose Bedienversuche vermieden.

Die vorhergehend beschriebenen, speziellen Betätigungsfolgen, Betätigungskriterien und Betätigungs-Zeitspannen zwischen den drei Zustimmtaster-Zuständen Ruhezustand (0), Zustimmungs-Betätigungszustand (Z) und Panik-Betätigungszustand (P) werden vorzugsweise von der elektronischen Auswerteschaltung 17 erfasst bzw. überwacht und entsprechend evaluiert bzw. umgesetzt. Dies erfolgt vorzugsweise durch mehrere unabhängig wirksame Erfassungs- und Auswertungskreise sowie gegebenenfalls mit kreuzweisem Vergleich der festgestellten und abgeleiteten Betätigungs- und Signalzustände, wie dies in Fig. 3 schematisch angedeutet wurde.

Wesentlich ist weiters, dass das mobile Handbediengerät 9, 9' zur technischen bzw. funktionalen Umsetzung der beschriebenen Verfahrensmaßnahmen ausgebildet ist. Hierfür ist sowohl eine geeignete schaltungstechnische Ausgestaltung, insbesondere zur mehrkreisigen sensorischen Erfassung und Auswertung der Betätigungszustände zweckmäßig. Insbesondere umfassen die Erfassungskreise 26, 26', 26"zwei oder mehr unabhängig wirksame bzw. auswertende Prozessoren (CPU) oder programmierbare Logikbausteine, als auch eine geeignete softwaretechnische bzw. programmgesteuerte Implementierung, wie dies in Fig. 3 schematisch veranschaulicht wurde. Insbesondere wird die softwaregesteuerte Steuervorrichtung 12 des Handbediengerätes 9, 9' bzw. deren elektronische Auswerteschaltung 17 derart programmiert, dass die entsprechenden Verfahrensmaßnahmen bzw. Verfahrensabläufe umgesetzt werden bzw. implementiert sind. Vor allem die entsprechend geschilderten Zustandsüberprüfungen in Verbindung mit den jeweiligen Betätigungsfolgen der Zustimmtaster 18-18" und die daraus abgeleiteten Ergebnisse bzw. Maßnahmen werden seitens der Auswerteschaltung 17, insbesondere seitens der Sicherheitsschalteinrichtung 16 umgesetzt.

Die Ausführungsbeispiele zeigen mögliche Ausführungsvarianten des mobilen Handbediengerätes 9, 9' bzw. der Sicherheitsschalteinrichtung 16, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausfiihrungsvarianten, die durch Kombinationen einzelner Details der dargestellten und beschriebenen Ausführungsvariante möglich sind, vom Schutzumfang mit umfasst.

Die den eigenständigen erfinderischen Lösungen zugrundeliegende Aufgabe kann der Beschreibung entnommen werden.

Vor allem können die einzelnen in den Fig. 1, 2, 3 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Einrichtung
- 2: Maschine
- 3: Roboter
- 4: Steuereinrichtung
- 5: Steuervorrichtung

- 6: Steuervorrichtung
- 7: Steuervorrichtung
- 8: Steuervorrichtung
- 9, 9': Handbediengerät
- 10: Bediener

- 11: Schnittstelle
- 12: Steuervorrichtung
- 13: Gehäuse
- 14: Kabel
- 15: Schnittstelle

- 16: Sicherheitsschalteinrichtung
- 17: Auswerteschaltung
- 18-18": Zustimmtaster
- 19: Bedienelement
- 20: Not-Aus-Schaltvorrichtung

- 21: Eingabevorrichtung
- 22: Eingabeelement
- 23: Ausgabevorrichtung
- 24: Signalisierungselement
- 25: Bildschirm

- 26: Erfassungskreis

## Patentansprüche

1. Verfahren zum Betreiben eines mobilen Handbediengerätes (9, 9'), welches für die Abgabe oder Freischaltung von potentiell gefahrbringenden Steuerkommandos an eine mit diesem oder mit einem weiteren Handbediengerät (9, 9') wirkungsverbundene, steuerbare technische Einrichtung (1), insbesondere einen Roboter oder eine Werkzeugmaschine, vorgesehen ist, mit einer Sicherheitsschalteinrichtung (16) umfassend wenigstens eine Auswerteschaltung (17) und zumindest einen mit der Auswerteschaltung (17) signaltechnisch verbundenen Zustimmtaster (18-18"), welcher einen ohne Betätigungskraft selbsttätig eingenommenen Ruhezustand (0) und zwei durch unterschiedlich hohe Betätigungskräfte und/oder durch unterschiedliche Verstellwege festgelegte, aufeinanderfolgende Betätigungszustände (i, ii) in Art eines Zustimmungs-Betätigungszustandes (Z) und eines Panik-Betätigungszustandes (P) aufweist, **dadurch gekennzeichnet, dass** dem zumindest einen Zustimmtaster (18-18") entweder ein Aktivmodus zugeordnet wird, in welchem bei Einnahme des Zustimmungs-Betätigungszustandes (Z) ein Zustimmungszustand zur Ausführung von potentiell gefahrbringenden Steuerkommandos signalisier- oder bereitstellbar ist, oder ein Inaktivmodus zugeordnet wird, in welchem eine Signalisierung oder Bereitstellung des Zustimmungszustandes unterdrückt oder nicht ermöglicht ist, und dass bei oder nach der durch die Auswerteschaltung (17) signaltechnisch erfassten Einnahme des Panik-Betätigungszustandes (P) oder des Panik-Betätigungszustandes (P) und des Ruhezustandes (0) dem jeweiligen Zustimmtaster (18-18") der Aktivmodus zugeordnet wird.

2. Verfahren nach Anspruch 1, **dadurch gekennzeichnet, dass** die Zuordnung des Aktivmodus erst nach mehrmaligem, insbesondere zweimaligem, Erfassen des Panik-Betätigungszustandes (P) mit zwischenzeitlichem Nichterfassen des Panik-Betätigungszustandes (P) innerhalb einer vorbestimmten Zeitspanne erfolgt.

3. Verfahren nach Anspruch 1, **dadurch gekennzeichnet, dass** dem zumindest einen Zustimmtaster (18-18") der Inaktivmodus zugeordnet wird, nachdem er in den Panik-Betätigungszustand (P) überführt wurde und ihm zuvor der Aktivmodus bereits zugeordnet war.

4. Verfahren nach Anspruch 1, **dadurch gekennzeichnet, dass** der Zustimmungszustand unterdrückt oder zurückgenommen wird, wenn ein Zustimmtaster (18-18") unabhängig vom Vorliegen des Aktiv- oder Inaktivmodus an diesem Zustimmtaster (18, 18") in den Panik-Betätigungszustand (P) versetzt wird.

5. Verfahren nach Anspruch 1, **dadurch gekennzeichnet, dass** der Zustimmungszustand unterdrückt oder zurückgenommen wird, wenn alle Zustimmtaster (18-18"), denen der Aktivmodus zugeordnet ist, im unbetätigten Ruhezustand (0) vorliegen.

6. Verfahren nach Anspruch 1, **dadurch gekennzeichnet, dass** der Zustimmungszustand unterdrückt oder zurückgenommen wird, wenn jedem Zustimmtaster (18-18") der Inaktivmodus zugeordnet ist.

7. Verfahren nach Anspruch 1, **dadurch gekennzeichnet, dass** nach dem Einschalten einer Versorgungsspannung für das Handbediengerät (9, 9') oder für die Sicherheitsschalteinrichtung (16), oder nach dem Anlegen eines gemeinsamen Rücksetzsignals für die Auswerteschaltung (17) oder die Zustimmtaster (18-18"), oder nach dem Übersenden eines Initialisierungskommandos an die Auswerteschaltung (17) jedem Zustimmtaster (18-18") der Inaktivmodus zugeordnet wird.

8. Verfahren nach Anspruch 1, **dadurch gekennzeichnet, dass** bei Zuordnung des Aktivmodus zu einem Zustimmtaster (18-18") innerhalb einer Gruppe von mehreren Zustimmtastern (18-18"), allen anderen Zustimmtastern (18-18") dieser Gruppe der Inaktivmodus zugeordnet wird.

9. Verfahren nach Anspruch 1, **dadurch gekennzeichnet, dass** beim Übergang des Betätigungszustandes eines Zustimmtasters (18-18") vom Zustimmungs-Betätigungszustand (Z) in den Panik-Betätigungszustand (P) oder vom Panik-Betätigungszustand (P) in den Zustimmungs-Betätigungszustand (Z) ein Zeitglied gestartet wird und nach Ablauf einer durch das Zeitglied vorgegebenen Zeitspanne diesem Zustimmtaster (18-18") oder jedem der ausgebildeten Zustimmtaster (18-18") der Inaktivmodus zugeordnet wird.

10. Verfahren nach Anspruch 1, **dadurch gekennzeichnet, dass** bei Einnahme des Panik-Betätigungszustandes (P) eines Zustimmtasters (18-18") oder beim Übergang des Betätigungszustandes eines Zustimmtasters (18-18") vom Panik-Betätigungszustand (P) in den Zustimmungs-Betätigungszustand (Z) oder vom Panik-Betätigungszustand (P) über den Zustimmungs-Betätigungszustand (Z) in den Ruhezustand (0) ein Zeitglied mit vorbestimmter Ablaufzeitspanne gestartet wird, bis zu dessen Ablauf die Signalisierung oder Bereitstellung eines Zustimmungszustandes gesperrt bleibt.

11. Verfahren nach Anspruch 1, **dadurch gekennzeichnet, dass** nach dem Aktivieren des Zustimmungszustandes ein Zeitglied mit vorbestimmter Zeitspanne gestartet und nach Ablauf dieser Zeitspanne die Signalisierung oder Bereitstellung des Zustimmungszustandes beendet wird.

12. Verfahren nach Anspruch 11, **dadurch gekennzeichnet, dass** vor Ablauf der vorbestimmten Zeitspanne ein Signalisierungselement (24) mit einer gegenüber dem Benutzer des Handbediengerätes (9, 9') optischen, akustischen und/oder taktilen Signalwirkung aktiviert wird.

13. Verfahren nach Anspruch 11, **dadurch gekennzeichnet, dass** vor Ablauf der vorbestimmten Zeitspanne vom Benutzer des Handbediengerätes (9, 9') ein Eingabeelement (22) zur Verlängerung der vorbestimmten Zeitspanne oder zum Neustart des Zeitgliedes betätigbar ist.

14. Verfahren nach Anspruch 1, **dadurch gekennzeichnet, dass** eine Erfassung wenigstens des Zustimmungs-Betätigungszustandes (Z) und des Panik-Betätigungszustandes (P) eines Zustimmtasters (18-18"), bevorzugt auch des Ruhezustandes (0) eines Zustimmtasters (18-18"), durch zwei- oder mehrkreisig redundante, sensorische Erfassungskreise (26-26") erfolgt, die Erfassungssignale der Erfassungskreise (26-26") von der Auswerteschaltung (17) zwei- oder mehrkreisig ausgewertet und ein Zustimmungszustand zwei- oder mehrkreisig beziehungsweise zwei- oder mehrkanalig ermittelt und an eine steuerbare technische Einrichtung (1) übertragen wird.

15. Verfahren nach Anspruch 14, **dadurch gekennzeichnet, dass** die Zuordnung des Aktivmodus nur dann erfolgt, wenn die Einnahme des Panik-Betätigungszustandes (P) durch jeden der redundanten sensorischen Erfassungskreise (26-26") festgestellt wurde.

16. Verfahren nach Anspruch 1, **dadurch gekennzeichnet, dass** eine Aktivierung eines Programmier- bzw. eines so genannten Teach-Modus oder eine Freischaltung von Bedienelementen (19) zur Abgabe von potentiell gefahrbringenden Steuerkommandos nur dann erfolgt, wenn zumindest einem Zustimmtaster (18-18") der Aktivmodus zugeordnet ist.

17. Verfahren nach Anspruch 1, **dadurch gekennzeichnet, dass** mittels einer visuell erfassbaren Ausgabevorrichtung (23), beispielsweise mittels einem Bildschirm (25) des Handbediengerätes (9) oder mittels einem Leuchtmittel am Zustimmtaster (18-18") oder nahe dem Zustimmtaster (18-18"), eine Darstellung oder Information ausgegeben wird, ob einem Zustimmtaster (18-18") und gegebenenfalls welchem Zustimmtaster (18-18") der Aktivmodus zugeordnet ist.

18. Verfahren nach Anspruch 1, **dadurch gekennzeichnet, dass** mittels einer visuell erfassbaren Ausgabevorrichtung (23), beispielsweise mittels einem Bildschirm (25) des Handbediengerätes (9) oder mittels einem Leuchtmittel am Zustimmtaster (18-18") oder nahe dem Zustimmtaster (18-18"), eine Information oder ein Signal ausgegeben wird, wenn ein Zustimmtaster (18-18"), welchem der Inaktivmodus zugeordnet ist, in den Zustimmungs-Betätigungszustand (Z) überführt wird.

19. Mobiles Handbediengerät (9, 9') mit einer Sicherheitsschalteinrichtung (16) für die Abgabe oder Freigabe von potentiell gefahrbringenden Steuerkommandos an eine mit diesem oder mit einem weiteren Handbediengerät (9, 9') wirkungsverbundene, steuerbare technische Einrichtung (1), insbesondere einen Roboter oder eine Werkzeugmaschine, **dadurch gekennzeichnet, dass** das Handbediengerät (9, 9') zur Umsetzung eines Verfahrens nach einem der Ansprüche 1 bis 18 ausgebildet ist.

20. Sicherheitsschalteinrichtung (16) umfassend wenigstens eine Auswerteschaltung (17) und zumindest einen mit der Auswerteschaltung (17) signaltechnisch verbundenen, einen Ruhezustand (0) und zwei Betätigungszustände (i, ii) aufweisenden Zustimmtaster (18-18"), welche Sicherheitsschalteinrichtung (16) zur Freigabe von potentiell gefahrbringenden Steuerkommandos an eine mit einem mobilen Handbediengerät (9, 9') wirkungsverbundene, steuerbare technische Einrichtung (1), insbesondere einen Roboter oder eine Werkzeugmaschine, ausgebildet ist, **dadurch gekennzeichnet, dass** die Sicherheitsschalteinrichtung (16) zur Umsetzung eines Verfahrens nach einem der Ansprüche 1 bis 18 ausgebildet ist.

## Claims

1. Method of operating a mobile hand-operated device (9, 9') provided as a means of outputting or enabling potentially dangerous control commands on a controllable technical device (1) actively connected to it or to another hand-operated device (9, 9'), in particular a robot or a machine tool, with a safety switch device (16) comprising at least one evaluation circuit (17) and at least one enable button (18-18") connected to the evaluation circuit (17) for transmitting signals, which has an idle mode (0) which is automatically assumed without operating force and two consecutive operating modes (i, ii) set on the basis of differing strengths of operating force and/or different displacement distances, namely an enable operation mode (Z) and a panic operating mode (P), **characterised in that** either an active mode is assigned to the at least one enable button (18-18") in which an enabling mode for running potentially dangerous control commands can be signalled or made available when the enable operation mode (Z) is assumed, or an inactive mode in which signalling or availability of the enabling mode is suppressed or not possible, and the active mode is assigned to the respective enable button (18-18") when the evaluation circuit (17) has detected on the basis of signals that the panic operating mode (P) or the panic operating mode (P) and the idle mode (0) has been assumed.

2. Method as claimed in claim 1, **characterised in that** the active mode is not assigned until the panic operating mode (P) has been detected several times, in particular two times, within a predefined period without the panic operating mode (P) being detected in between.

3. Method as claimed in claim 1, **characterised in that** the inactive mode is assigned to the at least one enable button (18-18") after it has been switched to the panic operating mode (P) and the active mode had already been assigned to it beforehand.

4. Method as claimed in claim 1, **characterised in that** the enabling mode is suppressed or cancelled if an enable button (18-18") is placed in the panic operating mode (P) irrespective of whether the active or inactive mode is prevailing at this enable button (18, 18").

5. Method as claimed in claim 1, **characterised in that** the enabling mode is suppressed or cancelled if all the enable buttons (18-18") to which the active mode has been assigned are in the non-operated idle mode (0).

6. Method as claimed in claim 1, **characterised in that** the enabling mode is suppressed or cancelled if the inactive mode has been assigned to every enable button (18-18").

7. Method as claimed in claim 1, **characterised in that** the inactive mode is assigned to every enable button (18-18") after a supply voltage for the hand-operated device (9, 9') or for the safety switch device (16) is switched on or after applying a common reset signal for the evaluation circuit (17) or enable buttons (18-18") or after transmitting an initialisation command to the evaluation circuit (17).

8. Method as claimed in claim 1, **characterised in that** when the active mode is assigned to one enable button (18-18") within a group of several enable buttons (18-18"), the inactive mode is assigned to all the other enable buttons (18-18") of this group.

9. Method as claimed in claim 1, **characterised in that** a timer is started when the operating mode of an enable button (18-18") is switched from the enable operation mode (Z) to the panic operating mode (P) or from the panic operating mode (P) to the enable operation mode (Z) and when a period predefined by the timer has elapsed, the inactive mode is assigned to this enable button (18-18") or to each of the enable buttons (18-18") provided.

10. Method as claimed in claim 1, **characterised in that** a timer with a predefined sequence time is started when an enable button (18-18") assumes the panic operating mode (P) or when the operating mode of an enable button (18-18") is switched from the panic operating mode (P) to the enable operation mode (Z) or from the panic operating mode (P) via the enable operation mode (Z) to the idle mode (0), and the signalling or availability of an enabling mode remains locked until it has elapsed.

11. Method as claimed in claim 1, **characterised in that** a timer with a predefined time is started when the enabling mode is activated and signalling or availability of the enabling mode is terminated when this time has elapsed.

12. Method as claimed in claim 11, **characterised in that** before the predefined time elapses, a signalling element (24) is activated which transmits an optical, acoustic and/or tactile signal effect to the user of the hand-operated device (9, 9').

13. Method as claimed in claim 11, **characterised in that** before the predefined time elapses, the user of the hand-operated device (9, 9') can operate an input element (22) to extend the predefined time or restart the timer.

14. Method as claimed in claim 1, **characterised in that** at least the enable operation mode (Z) and panic operating mode (P) of an enable button (18-18") and preferably also the idle mode (0) of an enable button (18-18") are detected by dual- or multi-circuit redundant, sensor-based detection circuits (26-26"), the detection signals of the detection circuits (26-26") are evaluated by the evaluation circuit (17) on a dual- or multi-circuit basis and an enabling mode is detected on a dual- or multi-circuit basis respectively dual- or multi-channel basis and transmitted to a controllable technical device (1).

15. Method as claimed in claim 14, **characterised in that** the active mode is not assigned until it has been established that each one of the redundant sensor-based detection circuits (26-26") has assumed the panic operating mode (P).

16. Method as claimed in claim 1, **characterised in that** a programming or a so-called teach mode is not activated or control elements (19) for emitting potentially dangerous control commands are not enabled until the active mode has been assigned to at least one enable button (18-18").

17. Method as claimed in claim 1, **characterised in that** a display or information is output by means of a visually perceptible output device (23), for example by means of a screen (25) of the hand-operated device (9) or by means of a lamp means on the enable button (18-18") or close to the enable button (18-18"), indicating whether the active mode has been assigned to an enable button (18-18") and optionally to which enable button (18-18").

18. Method as claimed in claim 1, **characterised in that** information or a signal is output by means of a visually perceptible output device (23), for example by means of a screen (25) of the hand-operated device (9) or by means of a lamp means on the enable button (18-18") or close to the enable button (18-18"), if an enable button (18-18") to which the inactive mode has been assigned is switched to the enable operation mode (Z) .

19. Mobile hand-operated device (9, 9') with a safety switch device (16) for outputting or enabling potentially dangerous control commands to a controllable technical device (1) actively connected to it or to another hand-operated device (9, 9'), in particular a robot or a machine tool, **characterised in that** the hand-operated device (9, 9') is designed to implement a method as claimed in one of claims 1 to 18.

20. Safety switch device (16) comprising at least one evaluation circuit (17) and at least one enable button (18-18") connected to the evaluation circuit (17) for transmitting signals and having an idle mode (0) and two operating modes (i, ii), which safety switch device (16) is designed to enable potentially dangerous control commands to a controllable technical device (1) actively connected to a mobile hand-operated device (9, 9'), in particular a robot or a machine tool, **characterised in that** the safety switch device (16) is designed to implement a method as claimed in one of claims 1 to 18.

## Revendications

1. Procédé d'exploitation d'un appareil de commande manuelle mobile (9, 9') conçu pour l'envoi ou l'autorisation de commandes potentiellement dangereuses à un dispositif technique (1) contrôlable relié de manière active à cet appareil de commande manuelle mobile (9, 9') ou à un autre appareil, avec un dispositif de commutation de sécurité (16) comprenant au moins un circuit d'analyse (17) et au moins un bouton d'autorisation (18-18"), relié par des signaux au circuit d'analyse (17), qui comprend un état de repos (0) qu'il prend de lui-même sans exercer de force et deux états d'actionnement (i, ii) successifs déterminés par des forces d'actionnement différentes et/ou par des courses différentes, sous la forme d'un état d'actionnement d'autorisation (Z) et d'un état d'actionnement d'urgence (P), **caractérisé en ce que**, au bouton d'autorisation (18-18"), est attribué soit un mode actif, dans lequel, lorsqu'il est dans l'état d'actionnement d'autorisation (Z), un état d'autorisation permettant l'exécution de commandes potentiellement dangereuses peut être signalé ou préparé, soit un mode inactif dans lequel une signalisation ou une préparation de l'état d'autorisation est inhibée ou non permise et **en ce que** lors ou après la détection de l'état d'actionnement d'urgence (P) ou de l'état d'actionnement d'urgence (P) et de l'état de repos (0) grâce aux signaux du circuit d'analyse (17), le mode actif est attribué au bouton d'autorisation correspondant (18-18").

2. Procédé selon la revendication 1, **caractérisé en ce que** l'attribution du mode actif n' a lieu qu'après plusieurs, de préférence deux, détections de l'état d'actionnement d'urgence (P) avec une non-détection entretemps de l'état d'actionnement d'urgence (P) dans un délai prédéterminé.

3. Procédé selon la revendication 1, **caractérisé en ce que** le mode inactif est attribué au bouton d'autorisation (18-18") après qu'il ait été mis dans l'état d'actionnement d'urgence (P) et que le mode actif lui ait déjà été attribué auparavant.

4. Procédé selon la revendication 1, **caractérisé en ce que** l'état d'autorisation est inhibé ou retiré lorsqu'un bouton d'autorisation (18-18") est mis dans l'état d'actionnement d'urgence (P) indépendamment de l'existence du mode actif ou inactif sur ce bouton d'autorisation (18, 18").

5. Procédé selon la revendication 1, **caractérisé en ce que** l'état d'autorisation est inhibé ou retiré lorsque tous les boutons d'autorisation (18-18") auxquels est attribué le mode actif, se trouvent dans l'état de repos non actionné (0).

6. Procédé selon la revendication 1, **caractérisé en ce que** l'état d'autorisation est inhibé ou retiré lorsque, à chaque bouton d'autorisation (18-18") est attribué le mode inactif.

7. Procédé selon la revendication 1, **caractérisé en ce que**, après la mise en marche d'une tension d'alimentation pour l'appareil de commande manuelle (9, 9') ou pour le dispositif de commutation de sécurité (16) ou après l'application d'un signal de réinitialisation commun pour le circuit d'analyse (17) ou les boutons d'autorisation (18-18"), ou après l'envoi d'une commande d'initialisation au circuit d'analyse (17), le mode inactif est attribué à chaque bouton d'autorisation (18-18").

8. Procédé selon la revendication 1, **caractérisé en ce que**, lors de l'attribution du mode actif à un bouton d'autorisation (18-18") à l'intérieur d'un groupe de plusieurs boutons d'autorisation (18-18"), le mode inactif est attribué à tous les autres boutons d'autorisation (18-18") de ce groupe.

9. Procédé selon la revendication 1, **caractérisé en ce que**, lors du passage de l'état d'actionnement d'un bouton d'autorisation (18-18") de l'état d'actionnement d'autorisation (Z) à l'état d'actionnement d'urgence (P) ou de l'état d'actionnement d'urgence (P) à l'état d'actionnement d'autorisation (Z), un composant de temporisation est démarré et, après l'écoulement d'un laps de temps prédéterminé par le composant de temporisation, le mode inactif est attribué à ce bouton d'autorisation (18-18") ou à chacun des autres boutons d'autorisation (18-18").

10. Procédé selon la revendication 1, **caractérisé en ce que**, lorsque le bouton d'autorisation (18-18") adopte un état d'actionnement d'urgence (P) ou lors du passage de l'état d'actionnement d'un bouton d'autorisation (18-18") de l'état d'actionnement d'urgence (P) à l'état d'actionnement d'autorisation (Z) ou de l'état d'actionnement d'urgence (P) à l'état de repos (0) en passant par l'état d' actionnement d'autorisation (Z), un composant de temporisation est démarré avec une période prédéterminée, et jusqu'à l'expiration de cette période, la signalisation ou la préparation d'un état d'autorisation reste bloquée.

11. Procédé selon la revendication 1, **caractérisé en ce que**, après l'activation de l'état d'autorisation, un composant de temporisation avec une période prédéterminée démarre et après l'expiration de cette période, la signalisation ou la préparation de l'état d'autorisation est terminée.

12. Procédé selon la revendication 11, **caractérisé en ce que**, avant l'expiration de la période prédéterminée, un élément de signalisation (24) avec une liaison de signal optique, acoustique et/ou tactile vis-à-vis de l'utilisateur de l'appareil de commande manuelle (9, 9') est activé.

13. Procédé selon la revendication 11, **caractérisé en ce que**, avant l'expiration de la période prédéterminée, un élément d'entrée (22) peut être actionné par l'utilisateur de l'appareil de commande manuelle (9, 9') pour prolonger la période prédéterminée ou pour redémarrer le composant de temporisation.

14. Procédé selon la revendication 1, **caractérisé en ce qu'**une détection au moins de l'état d'actionnement d'autorisation (Z) et de l'état d'actionnement d'urgence (P) d'un bouton d'autorisation (18-18"), de préférence également de l'état de repos (0) d'un bouton d'autorisation (18-18"), a lieu à l'aide deux circuits de détection (26-26") par capteurs redondants ou plus, les signaux de détection des circuits de détection (26-26") sont analysés par le circuit d'analyse (17) deux fois au plus et un état d'autorisation est déterminé sur deux boucles ou plus ou sur deux canaux ou plus et est transmis à un dispositif technique contrôlable (1).

15. Procédé selon la revendication 14, **caractérisé en ce que** l'attribution du mode actif n'a lieu que lorsque l'état d'actionnement d'urgence (P) a été détecté par chacun des circuits de détection (26-26") à capteurs redondants.

16. Procédé selon la revendication 1, **caractérisé en ce qu'**une activation d'un mode de programmation ou d'apprentissage ou un déverrouillage d'éléments de commande (19) pour l'envoi de commandes dangereuses n'a lieu que lorsque le mode actif est attribué à au moins un bouton d'autorisation (18-18").

17. Procédé selon la revendication 1, **caractérisé en ce que**, grâce à un dispositif de sortie visuelle (23), par exemple grâce à un écran (25) de l'appareil de commande manuelle (9) ou grâce à un moyen d'éclairage sur le bouton d'autorisation (18-18") ou à proximité du bouton d'autorisation (18-18"), une représentation ou une information est affichée afin d'indiquer si le mode actif à été attribué à un bouton d'autorisation (18-18") et le cas échéant à quel bouton d'autorisation (18-18").

18. Procédé selon la revendication 1, **caractérisé en ce que**, grâce à un dispositif de sortie visuelle (23), par exemple grâce à un écran (25) de l'appareil de commande manuelle (9) ou grâce à un moyen d'éclairage sur le bouton d'autorisation (18-18") ou à proximité du bouton d'autorisation (18-18"), une information ou un signal est envoyé lorsqu'un bouton d'autorisation (18-18") auquel le mode inactif est attribué passe dans l'état d'actionnement d'autorisation (Z).

19. Appareil de commande manuelle mobile (9, 9') avec un dispositif de commutation de sécurité (16) pour l'envoi ou l'autorisation de commandes potentiellement dangereuses à un dispositif technique (1) contrôlable relié de manière effective à cet appareil de commande manuelle ou à un autre appareil de commande manuelle (9, 9'), plus particulièrement un robot ou une machine-outil, **caractérisé en ce que** l'appareil de commande manuelle (9, 9') est conçu pour la mise en oeuvre d'un procédé selon l'une des revendications 1 à 18.

20. Dispositif de commutation de sécurité (16) comprenant au moins un circuit d'analyse (17) et au moins un bouton d'autorisation (18-18") possédant un état de repos (0) et deux états d'actionnement (i, ii), relié à l'aide de signaux avec le circuit d'analyse (17), ce dispositif de commutation de sécurité (16) étant conçu pour l'envoi de commandes potentiellement dangereuses à un dispositif technique (1) contrôlable relié de manière effective à un appareil de commande manuelle mobile (9, 9'), plus particulièrement un robot ou une machine-outil, **caractérisé en ce que** le dispositif de commutation de sécurité (16) est conçu pour la mise en oeuvre d'un procédé selon l'une des revendications 1 à 18.
